# EUROPÄISCHE PATENTSCHRIFT

(11) **EP 3 772 398 B1**
(45) Veröffentlichungstag und Bekanntmachung des Hinweises auf die Patenterteilung: **29.04.2026**
(21) Anmeldenummer: 20183905.7
(22) Anmeldetag: 03.07.2020
(51) Int. Cl.: B27B 17/08

(54) **BREMSVORRICHTUNG EINER KETTENSÄGE UND VERFAHREN ZUM SCHUTZ EINES BEDIENERS**
CHAIN SAW BRAKING DEVICE AND METHOD FOR PROTECTING AN OPERATOR
DISPOSITIF DE FREINAGE D'UNE SCIE À CHAÎNE ET PROCÉDÉ DE PROTECTION D'UN OPÉRATEUR

(30) Priorität: 08.08.2019 DE 102019211894
(43) Veröffentlichungstag der Anmeldung: 10.02.2021
(73) Patentinhaber: Robert Bosch GmbH, 70442 Stuttgart (DE)
(72) Erfinder: Stevens, Glyn, Bodorgan, LL62 5PR (GB); Dennis, Daniel, 72622 Nuertingen (DE); Esenwein, Florian, 70771 Leinfelden-Echterdingen (DE); Volpert, Dieter, Mt. Prospect, 60056 (US); Coussins, Adrian, Suffolk, IP 14 1Tt (GB); Lister, John, Bury St. Edmunds, IP31 2N8 (GB)

(56) Entgegenhaltungen:
- EP-B1- 2 447 022
- WO-A2-2012/021752
- DE-A1- 102007 048 052
- US-A1- 2010 257 743
- US-A1- 2011 186 319
- US-A1- 2014 166 323

## Beschreibung

### Stand der Technik

In WO 2012/021752 A2 ist bereits eine Bremsvorrichtung für eine Kettensäge, mit zumindest einer Sensoreinheit, die zumindest ein Sensorelement zu einer Erfassung von zumindest einer Bewegungskenngröße der Kettensäge umfasst, mit zumindest einer Bremseinheit zu einem Abbremsen und/oder Entkoppeln einer Sägekette der Kettensäge, mit zumindest einer Bedieneinheit zu einer Interaktion mit einem Bediener und mit zumindest einer Aktuierungseinheit, die dazu vorgesehen ist, zumindest in Abhängigkeit von der erfassten Bewegungskenngröße die Bremseinheit zu betätigen und ein Ausgabeelement der Bedieneinheit, welches dem Bediener einen betätigten Zustand der Bremseinheit ausgibt, zu aktivieren, vorgeschlagen worden. Aus dem Dokument US 2010/257743 A1 ist ein Bremsvorrichtung gemäß dem Oberbegriff des Anspruchs 1 und ein Verfahren gemäß dem Oberbegriff des Anspruchs 6 bekannt.

Ferner wird auf die Druckschriften WO 2012 021752 A2, DE 10 2007 048 052 A1, US 2011 186319 A1, US 2014 166323 A1 und EP 2 447 022 B1 verwiesen.

### Offenbarung der Erfindung

Die Erfindung betrifft eine Bremsvorrichtung für eine Kettensäge mit den Merkmalen des unabhängigen Anspruchs 1, eine Kettensäge gemäß Anspruch 5 und ein Verfahren zum Schutz eines Bedieners gemäß Anspruch 6. Vorteilhafte Weiterbildungen ergeben sich aus den abhängigen Ansprüchen.

Unter "vorgesehen" soll insbesondere speziell eingerichtet, speziell ausgelegt und/oder speziell ausgestattet verstanden werden. Darunter, dass ein Objekt, insbesondere die Aktuierungseinheit, zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Gefahrensituation, die verschieden ist von einem Zurückschlagen eines Sägeschwerts der Kettensäge" soll insbesondere eine, vorzugsweise unkontrollierte und/oder unbeabsichtigte, Bewegung der Kettensäge, insbesondere des Sägeschwerts, bei einer Verwendung durch den Bediener verstanden werden, die eine Gefahr für den Bediener und/oder andere Personen in der Umgebung der Kettensäge darstellen könnte und sich vorzugsweise von einem Zurückschlagen des Sägeschwerts, einem sogenannten Kickback, unterscheidet. Beispielsweise ist die Gefahrensituation als ein Abrutschen der Kettensäge, insbesondere des Sägeschwerts der Kettensäge, von einem zu bearbeitenden Werkstück, als ein, insbesondere unbeabsichtigtes, Herunterfallen der Kettensäge, als ein Durchschwingen der Kettensäge nach einem Durchtrennen eines Werkstücks, ein sogenannter Run-through, als eine durch eine äußere Kraft, wie beispielsweise durch ein Werkstück oder einen Tritt, ausgelöste Bewegung, insbesondere Drehbewegung, der Kettensäge, als Bewegung der Kettensäge durch einen Verlust eines sicheren Stands des Bedieners o. dgl. ausgebildet. Insbesondere ist die Bewegung der Kettensäge, insbesondere des Sägeschwerts, bei einem Durchschwingen zumindest im Wesentlichen parallel zu einer Vorschubbewegung der Kettensäge während einer Bearbeitung des Werkstücks ausgerichtet. Es ist denkbar, dass sich die Kettensäge, insbesondere das Sägeschwert, bei dem Durchschwingen, insbesondere über ein Festhalten eines Griffelements der Kettensäge durch den Bediener, in Richtung des Bedieners bewegt. Insbesondere wird die Kettensäge, insbesondere das Sägeschwert, bei dem Zurückschlagen in Richtung des Bedieners, insbesondere in Richtung eines Torsos und/oder eines Kopfes des Bedieners, bewegt. Besonders bevorzugt unterscheidet sich die von dem Zurückschlagen des Sägeschwerts verschiedene Gefahrensituation über die Bewegungskenngröße, insbesondere eine Richtung, einen Wert und/oder eine Art der Bewegungskenngröße, von dem Zurückschlagen des Sägeschwerts. Beispielsweise erfolgt beim Zurückschlagen des Sägeschwerts eine Beschleunigung des Sägeschwerts in eine relativ zu einer Ausrichtung des Sägeschwerts und/oder zu einer Führungsrichtung der Sägekette um das Sägeschwert festgelegte Richtung, welche insbesondere zumindest im Wesentlichen parallel zu einer Haupterstreckungsebene des Sägeschwerts und zumindest im Wesentlichen senkrecht zu einer Haupterstreckungsachse des Sägeschwerts ausgerichtet ist und von der Haupterstreckungsachse des Sägeschwerts aus zu einer Oberseite des Sägeschwerts zeigt. Unter einer "Haupterstreckungsebene" eines Bauteils, insbesondere des Sägeschwerts, soll insbesondere eine Ebene verstanden werden, welche parallel zu einer größten Seitenfläche eines kleinsten gedachten Quaders ist, welcher das Bauteil gerade noch vollständig umschließt, und insbesondere durch den Mittelpunkt des Quaders verläuft. Unter einer "Haupterstreckungsachse" eines Bauteils, insbesondere des Sägeschwerts, soll insbesondere eine Achse verstanden werden, welche parallel zu einer längsten Kante eines kleinsten geometrischen Quaders verläuft, welcher das Bauteil gerade noch vollständig umschließt. Unter "zumindest im Wesentlichen parallel" soll insbesondere eine Ausrichtung einer Geraden oder einer Ebene, insbesondere der Richtung, relativ zu einer weiteren Geraden oder einer weiteren Ebene, insbesondere der Haupterstreckungsebene des Sägeschwerts, insbesondere in einer Projektionsebene betrachtet, verstanden werden, wobei die Gerade oder die Ebene gegenüber der weiteren Geraden oder der weiteren Ebene eine Abweichung insbesondere kleiner als 8°, vorteilhaft kleiner als 5° und besonders vorteilhaft kleiner als 2° aufweist. Unter "zumindest im Wesentlichen senkrecht" soll insbesondere eine Ausrichtung einer Geraden oder einer Ebene, insbesondere der Richtung, relativ zu einer weiteren Geraden oder einer weiteren Ebene, insbesondere der Haupterstreckungsachse des Sägeschwerts, verstanden werden, wobei die Gerade oder die Ebene und die weitere Gerade oder die weitere Ebene, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise ist zumindest ein Rückschlaggrenzwert der Bewegungskenngröße, der zu einer Erkennung des Zurückschlagens des Sägeschwerts vorgesehen ist, größer als zumindest ein Grenzwert der Bewegungskenngröße, der zu einer Erkennung der, von dem Zurückschlagen des Sägeschwerts verschiedenen Gefahrensituation, vorzugsweise einem Durchschwingen der Kettensäge, vorgesehen ist.

Vorzugsweise weist die Bremsvorrichtung zumindest eine Steuer- und/oder Regeleinheit auf, die dazu eingerichtet ist, die Gefahrensituation in Abhängigkeit von der erfassten Bewegungskenngröße zu ermitteln. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "eingerichtet" soll insbesondere speziell programmiert, ausgelegt und/oder ausgestattet verstanden werden. Darunter, dass ein Objekt, insbesondere die Steuer- und/oder Regeleinheit, zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt. Bevorzugt ist die Steuer- und/oder Regeleinheit dazu eingerichtet, zu einer Ermittlung der Gefahrensituation, die erfasste Bewegungskenngröße mit dem zumindest einen Grenzwert der Bewegungskenngröße, welcher zu einer Erkennung der, von dem Zurückschlagen des Sägeschwerts verschiedenen Gefahrensituation vorgesehen ist, zu vergleichen. Insbesondere ist die Steuer- und/oder Regeleinheit dazu eingerichtet, bei einer Überschreitung des Grenzwerts der Bewegungskenngröße die zumindest eine Gefahrensituation zu ermitteln. Bevorzugt ist die Steuer- und/oder Regeleinheit dazu eingerichtet, bei einer Ermittlung der zumindest einen Gefahrensituation die Aktuierungseinheit zu einem Betätigen der Bremseinheit und zu einer Aktivierung des Ausgabeelements anzusteuern. Bevorzugterweise ist die Steuer- und/oder Regeleinheit dazu eingerichtet, die erfasste Bewegungskenngröße, insbesondere in Abhängigkeit von der ermittelten Gefahrensituation, periodisch oder kontinuierlich in der Speichereinheit zu hinterlegen. Bevorzugt sind die Steuer- und/oder Regeleinheit und die Sensoreinheit dazu vorgesehen und/oder eingerichtet, innerhalb von höchstens 65 ms, vorzugsweise höchstens 55 ms und besonders bevorzugt höchstens 45 ms, die Gefahrensituation, die verschieden ist von einem Zurückschlagen eines Sägeschwerts der Kettensäge, zu erfassen, zu ermitteln und die Aktuierungseinheit anzusteuern. Besonders bevorzugt sind in der Steuer- und/oder Regeleinheit eine Vielzahl von Grenzwerten hinterlegt, wobei insbesondere jeder Gefahrensituation einer Vielzahl von Gefahrensituationen, die verschieden ist von einem Zurückschlagen eines Sägeschwerts der Kettensäge, zumindest ein Grenzwert zugeordnet ist. Vorzugsweise ist die Steuer- und/oder Regeleinheit dazu eingerichtet, in Abhängigkeit von den hinterlegten Grenzwerten und der erfassten Bewegungskenngröße zumindest eine Gefahrensituation zu identifizieren.

Vorzugsweise ist das Sensorelement beispielsweise als Gyroskop, als Beschleunigungssensor, als, insbesondere mechanischer, Trägheitssensor, als Annäherungssensor, als Ultraschallsensor, als Kamera, als Infrarotsensor, als Spannungssensor o. dgl. ausgebildet. Es ist denkbar, dass die Sensoreinheit mehr als ein Sensorelement aufweist, wobei insbesondere die Sensorelemente zumindest teilweise voneinander verschieden ausgebildet sind. Bevorzugt ist das Sensorelement zumindest teilweise innerhalb oder an der Gehäuseeinheit der Kettensäge und/oder innerhalb oder an dem Sägeschwert angeordnet. Insbesondere in einer Ausgestaltung des Sensorelements als Gyroskop, ist das Sensorelement vorzugsweise innerhalb der Gehäuseeinheit, insbesondere in einem Nahbereich eines Masseschwerpunkts der Kettensäge, angeordnet. Insbesondere in einer Ausgestaltung des Sensorelements als Beschleunigungssensor und/oder als, insbesondere mechanischer, Trägheitssensor, ist das Sensorelement bevorzugt in oder an dem Sägeschwert oder in oder an einer dem Sägeschwert abgewandten Seite der Gehäuseeinheit angeordnet. In einer Ausgestaltung des Sensorelements als Kamera, als Infrarotsensor, als Ultraschallsensor, als Spannungssensor o. dgl., ist das Sensorelement bevorzugterweise an zumindest einer Seite, insbesondere einer Außenwand, der Gehäuseeinheit und/oder des Sägeschwerts angeordnet, wobei insbesondere das Sensorelement zumindest teilweise eine die Bremsvorrichtung umgebende Umgebung erfasst. Beispielsweise ist die Bewegungskenngröße als ein Abstand der Kettensäge zu einem Objekt und/oder einer externen Einheit, als eine Geschwindigkeit, als eine Winkelgeschwindigkeit um einen Schwerpunkt der Kettensäge oder einen Referenzpunkt, als eine Beschleunigung, als eine Winkelbeschleunigung um den Schwerpunkt der Kettensäge oder den Referenzpunkt o. dgl. ausgebildet. Es ist auch denkbar, beispielsweise in einer Ausgestaltung des Sensorelements als Kamera, als Infrarotsensor, als Ultraschallsensor, als Spannungssensor o. dgl., dass die Steuer-und/oder Regeleinheit dazu eingerichtet ist, die Bewegungskenngröße über mittels der Sensoreinheit, insbesondere dem Sensorelement, erfassten Daten zu ermitteln. Alternativ oder zusätzlich ist denkbar, dass die Steuer- und/oder Regeleinheit dazu eingerichtet ist, das Werkstück, die Kettensäge, insbesondere das Sägeschwert, und/oder eine die Kettensäge und/oder die Bremsvorrichtung umgebende Umgebung, insbesondere mittels der erfassten Daten, zur Ermittlung der Bewegungskenngröße der Kettensäge zu unterscheiden.

Vorzugsweise ist die Bremseinheit dazu vorgesehen, bei einem Betätigen durch die Aktuierungseinheit, die Sägekette und/oder ein Antriebselement einer Antriebseinheit der Kettensäge abzubremsen und/oder die Sägekette von der Antriebseinheit der Kettensäge zu entkoppeln. Insbesondere ist die Bremseinheit zumindest teilweise als Kraftschlussbremse oder als Formschlussbremse ausgebildet. Bevorzugt weist die Bremseinheit zumindest ein Bremselement auf, welches dazu vorgesehen ist, das Antriebselement der Antriebseinheit und/oder die Sägekette abzubremsen. Beispielsweise ist das Bremselement als Schlingfeder, als Bremsband, als Elektromagnet, als Rastelement, als Kontaktbolzen o. dgl. ausgebildet. Es ist denkbar, dass die Bremseinheit zumindest ein weiteres Bremselement umfasst, welches dazu vorgesehen ist, zumindest die Sägekette von der Antriebseinheit der Kettensäge zu entkoppeln. Beispielsweise ist das weitere Bremselement als Rutschkupplung, als Elektromagnet, als Federkupplung o. dgl. ausgebildet. Bevorzugterweise ist die Bremseinheit dazu vorgesehen, innerhalb von höchstens 60 ms, vorzugsweise höchstens 50 ms und besonders bevorzugt höchstens 40 ms, nach einem Betätigen durch die Aktuierungseinheit, die Sägekette zu stoppen.

Das Ausgabeelement ist insbesondere dazu vorgesehen, dem Bediener über zumindest ein haptisches, akustisches und/oder optisches Signal den betätigten Zustand der Bremseinheit auszugeben. Das Ausgabeelement ist vorzugsweise als Sicherheitsbedienelement, insbesondere als Rückschlag-Hebel, einem sogenannten Kickbackhebel, ausgebildet. Bevorzugt ist das Ausgabeelement dazu vorgesehen, insbesondere nach einem Betätigen der Bremseinheit und einem Aktivieren des Ausgabeelements, bei einem weiteren oder wiederholten Betätigen des Ausgabeelements, die Bremseinheit zu lösen, wobei insbesondere die Sägekette und/oder das Antriebselement freigegeben werden/wird und/oder die Sägekette mit der Antriebseinheit gekoppelt wird. In einer Ausgestaltung des Ausgabeelements als Sicherheitsbedienelement, insbesondere als Rückschlag-Hebel, ist die Aktuierungseinheit vorzugsweise dazu vorgesehen, das Ausgabeelement zu einer Ausgabe des betätigten Zustands der Bremseinheit in eine Sperrposition zu bewegen. Insbesondere ist das Ausgabeelement dazu vorgesehen, über eine Anordnung des Ausgabeelements in der Sperrposition dem Bediener ein Betätigen der Bremseinheit anzuzeigen. Vorzugsweise ist das als Sicherheitsbedienelement, insbesondere als Rückschlag-Hebel, ausgebildete Ausgabeelement beweglich, insbesondere schwenkbar, an der Gehäuseeinheit gelagert. Besonders bevorzugt ist das als Sicherheitsbedienelement, insbesondere als Rückschlag-Hebel, ausgebildete Ausgabeelement dazu vorgesehen, über eine Bewegung aus der Sperrposition in zumindest eine Grundposition die Bremseinheit in einen unbetätigten Zustand zu überführen und/oder zu lösen. Es ist denkbar, dass das als Sicherheitsbedienelement, insbesondere als Rückschlag-Hebel, ausgebildete Ausgabeelement federbelastet an der Gehäuseeinheit angeordnet ist, wobei insbesondere bei einer Aktivierung des Ausgabeelements zumindest ein Federelement der Bedieneinheit freigegeben wird, welches dazu vorgesehen ist, das Ausgabeelement in die Sperrposition zu bewegen. Alternativ oder zusätzlich ist denkbar, dass das Ausgabeelement als Display, wie beispielsweise als Touch-Display, als LCD, als OLED o. dgl., als akustisches Ausgabeelement, als Druckknopf o. dgl. ausgebildet ist. Insbesondere unabhängig von einer Ausgestaltung des Ausgabeelements, ist denkbar, dass die Bremseinheit, insbesondere nach einem Betätigen, über die Bedieneinheit, insbesondere das Ausgabeelement, zurücksetzbar ist. Beispielsweise in einer Ausgestaltung des Ausgabeelements als Display ist denkbar, dass dem Bediener über ein haptisches, akustisches und/oder optisches Signal der betätigte Zustand der Bremseinheit ausgegeben wird und die Bremseinheit mittels des Ausgabeelements über einen, beispielsweise haptischen, Eingabebefehl des Bedieners in einen unbetätigten Zustand überführbar ist.

Durch die erfindungsgemäße Ausgestaltung der Bremsvorrichtung kann eine vorteilhaft hohe Sicherheit eines Bedieners ermöglicht werden, insbesondere da Verletzungen bei einer Gefahrensituation, die verschieden ist von einem Zurückschlagen eines Sägeschwerts der Kettensäge, vorteilhaft verhindert werden können. Es kann vorteilhaft ein Abbremsen und/oder ein Entkoppeln der Sägekette bei einem Durchschwingen der Kettensäge ermöglicht werden.

Erfindungsgemäß wird vorgeschlagen, dass die Bremsvorrichtung zumindest eine, insbesondere die vorher genannte, Steuer- und/oder Regeleinheit umfasst, die dazu eingerichtet ist, bei einem Überschreiten eines Grenzwerts eines mittels der Sensoreinheit erfassten Signals der, insbesondere als Winkelgeschwindigkeit ausgebildeten, erfassten Bewegungskenngröße von mindestens 100°/s, vorzugsweise mindestens 150°/s und besonders bevorzugt mindestens 200°/s, die Gefahrensituation, die verschieden ist von einem Zurückschlagen eines Sägeschwerts der Kettensäge, zu identifizieren und die Aktuierungseinheit anzusteuern. Insbesondere beträgt der Grenzwert des mittels der Sensoreinheit erfassten Signals der, insbesondere als Winkelgeschwindigkeit ausgebildeten, erfassten Bewegungskenngröße höchstens 720°/s, vorzugsweise höchstens 630°/s und besonders bevorzugt höchstens 540°/s. Vorzugsweise ist der Grenzwert des mittels der Sensoreinheit erfassten Signals zu einer Identifikation des Durchschwingens der Kettensäge vorgesehen. Bevorzugt ist die Steuer- und/oder Regeleinheit dazu eingerichtet, den Grenzwert des mittels der Sensoreinheit erfassten Signals unabhängig von einer Richtung der erfassten Winkelbeschleunigung zu einer Identifikation der Gefahrensituation zu verwenden. Es ist denkbar, dass die Steuer- und/oder Regeleinheit dazu eingerichtet ist, bei einem Überschreiten eines weiteren Grenzwerts des mittels der Sensoreinheit erfassten Signals der, insbesondere als Beschleunigung ausgebildeten, erfassten Bewegungskenngröße von mindestens 2 g, vorzugsweise mindestens 1,5 g und besonders bevorzugt mindestens 1 g, die Gefahrensituation, die verschieden ist von einem Zurückschlagen eines Sägeschwerts der Kettensäge, zu identifizieren und die Aktuierungseinheit anzusteuern, wobei insbesondere g = 9,81 m/s² die Konstante der Erdbeschleunigung nahe der Erdoberfläche ist. Insbesondere beträgt der weitere Grenzwert des mittels der Sensoreinheit erfassten Signals der, insbesondere als Beschleunigung ausgebildeten, erfassten Bewegungskenngröße höchstens 5 g, vorzugsweise höchstens 4 g und besonders bevorzugt höchstens 3 g. Alternativ oder zusätzlich ist denkbar, dass die Steuer- und/oder Regeleinheit zumindest einen anderen weiteren Grenzwert des mittels der Sensoreinheit erfassten Signals der Bewegungskenngröße aufweist. Insbesondere ist der andere weitere Grenzwert als ein erfasstes oder ermitteltes Differential der Bewegungskenngröße ausgebildet. Vorzugsweise ist die Steuer- und/oder Regeleinheit dazu eingerichtet, zumindest einen momentan über die Sensoreinheit erfassten Wert der Bewegungskenngröße mit zumindest einem zuvor erfassten Wert der Bewegungskenngröße zu vergleichen und eine Differenz des momentan erfassten Werts und des zuvor erfassten Werts der Bewegungskenngröße zu einer Identifikation der Gefahrensituation, die verschieden ist von einem Zurückschlagen eines Sägeschwerts der Kettensäge, mit dem anderen weiteren Grenzwert zu vergleichen. Bevorzugt ist die Steuer- und/oder Regeleinheit dazu eingerichtet, bei einem Überschreiten des anderen weiteren Grenzwerts des mittels der Sensoreinheit erfassten Signals der erfassten Bewegungskenngröße die Gefahrensituation, die verschieden ist von einem Zurückschlagen eines Sägeschwerts der Kettensäge, zu identifizieren und die Aktuierungseinheit anzusteuern. Insbesondere beträgt ein Zeitintervall zwischen einer Erfassung des momentan über die Sensoreinheit erfassten Werts der Bewegungskenngröße und einer Erfassung des zuvor erfassten Werts der Bewegungskenngröße höchstens 40 ms, vorzugsweise höchstens 20 ms und besonders bevorzugt höchstens 10 ms. Bevorzugterweise beträgt der andere weitere Grenzwert des mittels der Sensoreinheit erfassten Signals der Bewegungskenngröße mindestens 100°/s, vorzugsweise mindestens 150°/s und besonders bevorzugt mindestens 200°/s. Es kann eine vorteilhaft hohe Sicherheit eines Bedieners der Kettensäge ermöglicht werden, insbesondere da Gefahrensituationen, die verschieden sind von einem Zurückschlagen des Sägeschwerts der Kettensäge, vorteilhaft identifiziert werden können.

Zudem wird vorgeschlagen, dass die Aktuierungseinheit zumindest ein Aktuierungselement zu einem Betätigen der Bremseinheit und/oder einem Aktivieren des Ausgabeelements aufweist, wobei das Aktuierungselement zumindest teilweise aus einem Formgedächtnismaterial gebildet ist. Unter einem "Formge-dächtnismaterial" soll insbesondere ein Material verstanden werden, welches einen Formgedächtniseffekt aufweist, wobei das Material, insbesondere nach einer Umformung, mittels einer Anregung auf zumindest eine ursprüngliche Form zurückgeführt werden kann. Vorzugsweise ist das Formgedächtnismaterial als eine Formgedächtnislegierung und/oder ein Formgedächtnispolymer ausgebildet. Insbesondere ist das Formgedächtnismaterial magnetisch, thermisch oder optisch anregbar. Bevorzugt weist das Aktuierungselement zumindest zwei Formzustände auf, die über eine Änderung eines magnetischen Felds, über eine Änderung einer Temperatur oder ein Zusammenwirken mit einer elektromagnetischen Strahlung wechselbar sind. Vorzugsweise ist das aus einem Formgedächtnismaterial gebildete Aktuierungselement dazu vorgesehen, in zumindest einem ersten Formzustand, insbesondere einem unangeregten Zustand, die Bremseinheit in dem unbetätigten Zustand zu halten. Bevorzugt ist das aus einem Formgedächtnismaterial gebildete Aktuierungselement dazu vorgesehen, in zumindest einem zweiten Formzustand, die Bremseinheit zu betätigen und/oder das Ausgabeelement zu aktivieren. In einer besonders bevorzugten Ausgestaltung der Bremsvorrichtung ist das aus einem Formgedächtnismaterial gebildete Aktuierungselement dazu vorgesehen, durch einen Übergang von dem ersten Formzustand in den zweiten Formzustand die Bremseinheit zu betätigen und das Ausgabeelement zu aktivieren. Vorzugsweise ist das Aktuierungselement dazu vorgesehen, insbesondere bei einem Ansteuern der Aktuierungseinheit durch die Steuer- und/oder Regeleinheit, zumindest ein Auslöseelement der Aktuierungseinheit über zumindest einen Formzustandsübergang zu aktivieren und/oder freizugeben. Beispielsweise ist der Formzustandsübergang des Aktuierungselements als ein Zusammenziehen oder ein Ausdehnen des Aktuierungselements ausgebildet, wobei insbesondere eine Erstreckung des Aktuierungselements entlang zumindest einer Achse des Aktuierungselements verändert wird. Es kann ein vorteilhaft schnelles Betätigen der Bremseinheit ermöglicht werden, insbesondere da durch das aus einem Formgedächtnismaterial gebildete Aktuierungselement eine Anzahl von zum Betätigen der Bremseinheit zu bewegenden Bauteilen vorteilhaft geringgehalten werden kann. Es kann eine vorteilhaft kompakte Aktuierungseinheit ermöglicht werden. Es kann eine vorteilhaft geringe Fehleranfälligkeit der Aktuierungseinheit erreicht werden, insbesondere da ein Blockieren von zu bewegenden Elementen verhindert werden kann.

Ferner wird vorgeschlagen, dass die Aktuierungseinheit dazu vorgesehen ist, das Ausgabeelement zumindest mechanisch entkoppelt von und/oder nach einem Betätigen der Bremseinheit zu aktivieren. Bevorzugt ist die Aktuierungseinheit derart ausgebildet, dass zumindest eine mittels der Aktuierungseinheit aufgebrachte Kraft zum Aktivieren des Ausgabeelements zumindest verschieden ist von einer mittels der Aktuierungseinheit aufgebrachten weiteren Kraft zur Betätigung der Bremseinheit. Vorzugsweise sind das Ausgabeelement und die Bremseinheit, insbesondere beim Betätigen der Bremseinheit und/oder Aktivieren des Ausgabeelements, mechanisch getrennt voneinander ausgebildet. Bevorzugt ist die Aktuierungseinheit derart ausgebildet, dass die Aktivierung des Ausgabeelements asynchron zur Betätigung der Bremseinheit erfolgt. Besonders bevorzugt ist die Aktuierungseinheit derart ausgebildet, dass die Betätigung der Bremseinheit zumindest gleichzeitig, vorzugsweise vor, der Aktivierung des Ausgabeelements erfolgt. Es ist denkbar, dass die Aktuierungseinheit zumindest ein weiteres Aktuierungselement aufweist, wobei das Aktuierungselement dazu vorgesehen ist, die Bremseinheit zu betätigen und das weitere Aktuierungselement dazu vorgesehen ist, das Ausgabeelement zu aktivieren. Insbesondere sind das Aktuierungselement und das weitere Aktuierungselement getrennt voneinander ausgebildet. Es kann ein vorteilhaft schnelles Betätigen der Bremseinheit ermöglicht werden, insbesondere da eine Verzögerung der Betätigung der Bremseinheit durch eine Aktivierung des Ausgabeelements verhindert werden kann. Es kann eine vorteilhaft hohe Sicherheit eines Bedieners der Kettensäge ermöglicht werden, insbesondere da eine Distanz, welche die Kettensäge bis zu einem vollständigen Abbremsen der Sägekette zurücklegt, verringert werden kann.

Des Weiteren wird vorgeschlagen, dass die Aktuierungseinheit zumindest ein erstes Auslöseelement und zumindest ein zweites Auslöseelement umfasst, wobei das erste Auslöseelement dazu vorgesehen ist, die Bremseinheit zu betätigen und das zweite Auslöseelement dazu vorgesehen ist, das Ausgabeelement zu aktivieren. Insbesondere ist das erste Auslöseelement dazu vorgesehen, bei einer Ansteuerung der Aktuierungseinheit durch die Steuer- und/oder Regeleinheit das Bremselement der Bremseinheit zu aktivieren und/oder mit einer Auslösekraft zu beaufschlagen, wobei insbesondere das aktivierte und/oder mit der Auslösekraft beaufschlagte Bremselement dazu vorgesehen ist, die Sägekette und/oder das Antriebselement zu bremsen und/oder die Sägekette von der Antriebseinheit zu entkoppeln. Vorzugsweise ist das zweite Auslöseelement dazu vorgesehen, bei einer Ansteuerung der Aktuierungseinheit durch die Steuer-und/oder Regeleinheit das Ausgabeelement der Bedieneinheit zu aktivieren und/oder mit einer Auslösekraft zu beaufschlagen, wobei insbesondere das aktivierte und/oder mit der Auslösekraft beaufschlagte Ausgabeelement dazu vorgesehen ist, insbesondere über eine Bewegung des Ausgabeelements, dem Bediener den betätigten Zustand der Bremseinheit auszugeben. Bevorzugt sind/ist das erste Auslöseelement und/oder das zweite Auslöseelement als Federelement ausgebildet, wobei insbesondere das erste Auslöseelement und/oder das zweite Auslöseelement in zumindest einem unaktivierten Zustand der Aktuierungseinheit entgegen einer Federkraft vorgespannt ausgebildet sind. Vorzugsweise umfasst die Aktuierungseinheit zumindest ein Koppelelement, welches dazu vorgesehen ist, das zumindest eine Aktuierungselement und das erste Auslöseelement und/oder das zweite Auslöseelement in zumindest einem Betriebszustand der Aktuierungseinheit kraft- und/oder formschlüssig zu verbinden. Insbesondere in einer Ausgestaltung des ersten Auslöseelements und/oder des zweiten Auslöseelements als Federelement(e), ist das Koppelelement dazu vorgesehen, das erste Auslöseelement und/oder das zweite Auslöseelement in dem unaktivierten Zustand der Aktuierungseinheit in einem vorgespannten Zustand zu halten. Beispielsweise ist das Koppelelement als Hebel, als Schieber, als Elektromagnet o. dgl. ausgebildet. Insbesondere ist das Koppelelement dazu vorgesehen, bei einem Ansteuern der Aktuierungseinheit, insbesondere durch eine Aktuierung durch das Aktuierungselement, das erste Auslöseelement und/oder das zweite Auslöseelement freizugeben, wobei insbesondere die Bremseinheit betätigt und das Ausgabeelement aktiviert wird. Vorzugsweise sind das erste Auslöseelement und/oder das zweite Auslöseelement dazu vorgesehen, bei einem Freigeben durch das Koppelelement, das Bremselement, das weitere Bremselement, das Antriebselement und/oder das Ausgabeelement mit einer Auslösekraft zu beaufschlagen. Es sind jedoch auch andere Ausgestaltungen des ersten Auslöseelements und/oder des zweiten Auslöseelements denkbar, insbesondere unabhängig von dem Koppelelement, wobei das erste Auslöseelement und/oder das zweite Auslöseelement beispielsweise als Elektromagnet, als Pneumatikelement, als Hydraulikelement, als Piezoelement o. dgl. ausgebildet sind/ist. Es kann ein vorteilhaft schnelles Betätigen der Bremseinheit ermöglicht werden, insbesondere da durch die unabhängige Aktivierung des Ausgabeelements eine Betätigungszeit der Bremseinheit durch die Aktuierungseinheit verringert werden kann. Es kann eine vorteilhaft hohe Sicherheit eines Bedieners der Kettensäge ermöglicht werden, insbesondere da eine Distanz, welche die Kettensäge bis zu einem vollständigen Abbremsen der Sägekette zurücklegt, verringert werden kann.

Außerdem wird eine Kettensäge, insbesondere eine handgeführte Kettensäge, mit zumindest einer erfindungsgemäßen Bremsvorrichtung vorgeschlagen. Vorzugsweise umfasst die Kettensäge zumindest eine Elektronikeinheit, wobei insbesondere die Steuer- und/oder Regeleinheit als Teil der Elektronikeinheit der Kettensäge ausgebildet ist. Bevorzugt sind/ist die Bremseinheit und/oder die Aktuierungseinheit zumindest größtenteils innerhalb der Gehäuseeinheit der Kettensäge angeordnet. Bevorzugterweise weist die Kettensäge, insbesondere die Sensoreinheit der Bremsvorrichtung, zumindest ein weiteres Sensorelement auf, das dazu vorgesehen ist, zumindest eine Betriebskenngröße der Kettensäge, insbesondere der Antriebseinheit, zu erfassen. Vorzugsweise ist die Betriebskenngröße beispielsweise als momentane oder gemittelte Drehzahl eines Antriebselements der Antriebseinheit, als ein momentaner oder gemittelter Energieverbrauch der Antriebseinheit, als eine momentane oder gemittelte Geschwindigkeit der Sägekette o. dgl. ausgebildet. Bevorzugterweise ist das weitere Sensorelement innerhalb oder an der Gehäuseeinheit und/oder der Antriebseinheit angeordnet. Insbesondere ist die Antriebseinheit zumindest teilweise als ein Elektromotor oder als ein Verbrennungsmotor ausgebildet. Durch die erfindungsgemäße Ausgestaltung der Kettensäge kann eine vorteilhaft hohe Sicherheit eines Bedieners der Kettensäge ermöglicht werden, insbesondere da Verletzungen bei einer Gefahrensituation, die verschieden ist von einem Zurückschlagen eines Sägeschwerts der Kettensäge, vorteilhaft verhindert werden können. Es kann vorteilhaft ein Abbremsen und/oder ein Entkoppeln der Sägekette bei einem Durchschwingen der Kettensäge ermöglicht werden.

Außerdem wird ein Verfahren zum Schutz eines Bedieners einer, insbesondere der vorher genannten, erfindungsgemäßen Kettensäge, mittels zumindest einer Bremsvorrichtung, insbesondere der, insbesondere vorher genannten, erfindungsgemäßen Bremsvorrichtung, vorgeschlagen, wobei in zumindest einem Verfahrensschritt zumindest eine, insbesondere die vorher genannte, Bewegungskenngröße, insbesondere eine Winkelgeschwindigkeit und/oder eine Beschleunigung, der Kettensäge mittels zumindest einer, insbesondere der vorher genannten, Sensoreinheit der Bremsvorrichtung erfasst wird und wobei in zumindest einem Verfahrensschritt mittels zumindest einer, insbesondere der vorher genannten, Aktuierungseinheit der Bremsvorrichtung zumindest in Abhängigkeit von der erfassten Bewegungskenngröße zumindest eine, insbesondere die vorher genannte, Bremseinheit der Bremsvorrichtung zu einem Abbremsen und/oder Entkoppeln einer Sägekette der Kettensäge betätigt wird und zumindest ein, insbesondere bewegbares, insbesondere das vorher genannte, Ausgabeelement, insbesondere Sicherheitsbedienelement, einer, insbesondere der vorher genannten, Bedieneinheit der Bremsvorrichtung zu einer Ausgabe eines betätigten Zustands der Bremseinheit an den Bediener aktiviert wird.

Es wird vorgeschlagen, dass in zumindest einem Verfahrensschritt mittels der Aktuierungseinheit in Abhängigkeit von zumindest einer zumindest über die erfasste Bewegungskenngröße ermittelten, insbesondere der vorher genannten, Gefahrensituation, die verschieden ist von einem Zurückschlagen eines Sägeschwerts der Kettensäge, die Bremseinheit betätigt wird und das Ausgabeelement aktiviert wird. Vorzugsweise wird in zumindest einem Verfahrensschritt mittels einer, insbesondere der vorher genannten, Steuer- und/oder Regeleinheit der Bremsvorrichtung in Abhängigkeit von der erfassten Bewegungskenngröße die Gefahrensituation, die verschieden ist von einem Zurückschlagen eines Sägeschwerts der Kettensäge, ermittelt. Bevorzugt erfolgen/erfolgt in zumindest einem Verfahrensschritt eine Ermittlung der Gefahrensituation, die verschieden ist von einem Zurückschlagen eines Sägeschwerts der Kettensäge, mittels der Steuer-und/oder Regeleinheit und/oder eine Erfassung der Bewegungskenngröße der Kettensäge mittels der Sensoreinheit periodisch oder kontinuierlich. Bevorzugterweise erfolgt die Ermittlung der Gefahrensituation, die verschieden ist von einem Zurückschlagen eines Sägeschwerts der Kettensäge, mittels der Steuer-und/oder Regeleinheit über einen Vergleich der erfassten Bewegungskenngröße mit zumindest einem Grenzwert der Bewegungskenngröße, wobei insbesondere bei einem Über- oder Unterschreiten des Grenzwerts der Bewegungskenngröße durch die erfasste Bewegungskenngröße eine Identifikation der Gefahrensituation erfolgt. Vorzugsweise erfolgt in zumindest einem Verfahrensschritt, insbesondere nach einem Aktivieren des Ausgabeelements und einem Betätigen der Bremseinheit, mittels eines Deaktivierens, insbesondere eines Zurückbewegens, des Ausgabeelements ein Lösen der Bremseinheit. Bevorzugt werden/wird in zumindest einem Verfahrensschritt bei einem Betätigen der Bremseinheit die Steuer- und/oder Regeleinheit und/oder die Sensoreinheit in zumindest einen passiven Zustand überführt, wobei insbesondere eine Erfassung der Bewegungskenngröße und/oder eine Ermittlung der Gefahrensituation ausgesetzt wird.

Insbesondere werden/wird in zumindest einem Verfahrensschritt beim Lösen der Bremseinheit die Steuer- und/oder Regeleinheit und/oder die Sensoreinheit in einen aktiven Zustand überführt, wobei insbesondere die Erfassung der Bewegungskenngröße und/oder die Ermittlung der Gefahrensituation kontinuierlich oder periodisch erfolgt. In einer besonders bevorzugten Ausgestaltung, bei der insbesondere das Ausgabeelement als Sicherheitsbedienelement, insbesondere als Rückschlag-Hebel, ausgebildet ist, wird vorzugsweise das Ausgabeelement in zumindest einem Verfahrensschritt bei einem Aktivieren des Ausgabeelements durch die Aktuierungseinheit mittels eines Auslöseelements der Aktuierungseinheit, insbesondere mittels des zweiten Auslöseelements, um zumindest eine Schwenkachse in die Sperrposition bewegt. Insbesondere erfolgt in zumindest einem Verfahrensschritt ein Deaktivieren und/oder ein Zurückbewegen des Ausgabeelements über eine Bewegung des als Sicherheitsbedienelement, insbesondere als Rückschlag-Hebel, ausgebildeten Ausgabeelements aus der Sperrposition in die Grundposition des Ausgabeelements mittels des Bedieners. Durch die erfindungsgemäße Ausgestaltung des Verfahrens kann eine vorteilhaft hohe Sicherheit eines Bedieners der Kettensäge ermöglicht werden, insbesondere da Verletzungen bei einer Gefahrensituation, die verschieden ist von einem Zurückschlagen eines Sägeschwerts der Kettensäge, vorteilhaft verhindert werden können. Es kann vorteilhaft ein Abbremsen und/oder ein Entkoppeln der Sägekette bei einem Durchschwingen der Kettensäge ermöglicht werden.

Des Weiteren wird vorgeschlagen, dass in zumindest einem Verfahrensschritt mittels der Aktuierungseinheit das Ausgabeelement zumindest mechanisch entkoppelt von und/oder nach einem Betätigen der Bremseinheit aktiviert wird. Es kann ein vorteilhaft schnelles Betätigen der Bremseinheit ermöglicht werden, insbesondere da eine Verzögerung der Betätigung der Bremseinheit durch eine Aktivierung des Ausgabeelements verhindert werden kann. Es kann eine vorteilhaft hohe Sicherheit eines Bedieners der Kettensäge ermöglicht werden, insbesondere da eine Distanz, welche die Kettensäge bis zu einem vollständigen Abbremsen der Sägekette zurücklegt, verringert werden kann.

Zudem wird vorgeschlagen, dass in zumindest einem Verfahrensschritt mittels zumindest einer, insbesondere der vorher genannten, Steuer- und/oder Regeleinheit der Bremsvorrichtung zumindest ein, insbesondere der vorher genannte, Grenzwert zu einer Ermittlung der Gefahrensituation, die verschieden ist von einem Zurückschlagen eines Sägeschwerts der Kettensäge, dynamisch in Abhängigkeit von zumindest einem gemittelten Verlauf der erfassten Bewegungskenngröße bestimmt wird. Vorzugsweise wird in zumindest einem Verfahrensschritt die erfasste Bewegungskenngröße mittels der Steuer- und/oder Regeleinheit kontinuierlich oder periodisch in einer Speichereinheit der Steuer- und/oder Regeleinheit hinterlegt, wobei insbesondere der gemittelte Verlauf mittels der Steuer- und/oder Regeleinheit aus den hinterlegten Bewegungskenngrößen zumindest eines vergangenen Zeitintervalls bestimmt wird. Vorzugsweise wird eine Größe des vergangenen Zeitintervalls mittels der Steuer- und/oder Regeleinheit in Abhängigkeit von einer Benutzereinstellung, einem Bediener, eines gemittelten Maximalwerts der erfassten Bewegungskenngröße, einer anderen erfassten Bewegungskenngröße der Kettensäge und/oder einer Aktivierungsdauer einer Antriebseinheit der Kettensäge bestimmt. Beispielsweise wird der Grenzwert zur Ermittlung der Gefahrensituation mittels der Steuer- und/oder Regeleinheit proportional zu einem Durchschnittswert und/oder zu einem Maximalwert des gemittelten Verlaufs bestimmt. Insbesondere in einer Ausgestaltung des Verfahrens, bei der ein Differential der erfassten Bewegungskenngröße als Grenzwert herangezogen wird, wird vorzugsweise der Grenzwert zu einer Ermittlung der Gefahrensituation mittels der Steuer- und/oder Regeleinheit in Abhängigkeit von einer Varianz und/oder einer Standardabweichung des gemittelten Verlaufs bestimmt, wobei insbesondere der Grenzwert proportional zur mittels der Steuer- und/oder Regeleinheit ermittelten Varianz und/oder Standardabweichung des gemittelten Verlaufs bestimmt wird. Beispielsweise ist denkbar, dass in zumindest einem Verfahrensschritt mittels der Steuer- und/oder Regeleinheit der Grenzwert zu einer Ermittlung der Gefahrensituation auf einen Wert gesetzt wird, der mindestens 20%, vorzugsweise mindestens 30% und besonders bevorzugt mindestens 40% eines Mittelwerts des gemittelten Verlaufs der erfassten Bewegungskenngröße entspricht. Es kann eine vorteilhaft hohe Sicherheit eines Bedieners ermöglicht werden, insbesondere da der Grenzwert zur Betätigung der Bremsvorrichtung vorteilhaft situations- und bedienerspezifisch bestimmt werden kann. Es kann eine Fehlfunktion der Bremsvorrichtung durch äußere Einflüsse und/oder Beschädigungen vorteilhaft verhindert werden, insbesondere da durch eine Berücksichtigung des gemittelten Verlaufs der Bewegungskenngröße bei der Bestimmung des Grenzwerts eine Identifikation einer Gefahrensituation über den Grenzwert vorteilhaft unabhängig von systematischen Abweichungen der Bewegungskenngröße erfolgen kann.

Ferner wird vorgeschlagen, dass in zumindest einem Verfahrensschritt mittels zumindest einer, insbesondere der vorher genannten, Steuer- und/oder Regeleinheit der Bremsvorrichtung zumindest ein Grenzwert zu einer Ermittlung der Gefahrensituation, die verschieden ist von einem Zurückschlagen eines Sägeschwerts der Kettensäge, in Abhängigkeit von einer Bewegung einer, insbesondere der vorher genannten, Gehäuseeinheit und/oder des Sägeschwerts der Kettensäge bestimmt wird. Vorzugsweise wird in zumindest einem Verfahrensschritt mittels der Sensoreinheit und der Steuer- und/oder Regeleinheit über die erfasste Bewegungskenngröße der Kettensäge, insbesondere über eine Vielzahl von erfassten Bewegungskenngrößen der Kettensäge, die Bewegung der Gehäuseeinheit und/oder des Sägeschwerts, insbesondere während eines Bearbeitens eines Werkstücks, berechnet und/oder ermittelt. Insbesondere wird mittels der Steuer-und/oder Regeleinheit anhand von der Bewegung der Gehäuseeinheit und/oder des Sägeschwerts, insbesondere während eines Bearbeitens eines Werkstücks, ein Bearbeitungsvorgang der Kettensäge bestimmt. Vorzugsweise erfolgt mittels der Steuer- und/oder Regeleinheit in Abhängigkeit von der Bewegung der Gehäuseeinheit und/oder des Sägeschwerts, insbesondere während eines Bearbeitens eines Werkstücks, und/oder von dem bestimmten Bearbeitungsvorgang der Kettensäge eine Identifikation von möglichen Gefahrensituationen, die verschieden ist von einem Zurückschlagen eines Sägeschwerts der Kettensäge. Besonders bevorzugt wird der Grenzwert zu einer Ermittlung der Gefahrensituation, die verschieden ist von einem Zurückschlagen eines Sägeschwerts der Kettensäge, mittels der Steuer- und/oder Regeleinheit in Abhängigkeit von den identifizierten möglichen Gefahrensituationen bestimmt. Beispielsweise wird, wenn über die Sensoreinheit und die Steuer- und/oder Regeleinheit ein vertikaler Schnitt der Kettensäge in Richtung eines Untergrunds ermittelt wird, der Grenzwert zu einer Ermittlung der Gefahrensituation in eine Vorschubrichtung der Kettensäge derart angepasst, dass bei einem Durchschwingen der Kettensäge, insbesondere bei einem Nachgeben des Werkstücks, die Bremseinheit betätigt wird, wobei insbesondere ein weiterer Grenzwert zu einer Ermittlung der Gefahrensituation in eine von der Vorschubrichtung abweichende Richtung bestimmt wird. Vorzugsweise wird in zumindest einem Verfahrensschritt mittels der Steuer- und/oder Regeleinheit eine Richtung der Vorschubbewegung in Abhängigkeit von der erfassten Bewegungskenngröße, insbesondere einer Geschwindigkeit des Sägeschwerts, und/oder von einem Betätigen eines Betätigungselements der Kettensäge bestimmt. Insbesondere ist das Betätigungselement der Kettensäge dazu vorgesehen, die Antriebseinheit der Kettensäge zu steuern und/oder zu regeln. Es ist denkbar, dass in zumindest einem Verfahrensschritt mittels der Steuer- und/oder Regeleinheit in Abhängigkeit von der erfassten Bewegungskenngröße und/oder der Bewegung der Gehäuseeinheit und/oder des Sägeschwerts, insbesondere während eines Bearbeitens eines Werkstücks, zumindest ein, insbesondere dynamisches, virtuelles Modell der Kettensäge erstellt wird, wobei insbesondere das virtuelle Modell der Kettensäge zu einer Identifikation der möglichen Gefahrensituationen und/oder der Gefahrensituation, die verschieden ist von einem Zurückschlagen eines Sägeschwerts der Kettensäge, herangezogen wird. Vorzugsweise wird das erstellte virtuelle Modell der Kettensäge, insbesondere bei einer Identifikation der Gefahrensituation, mittels der Steuer- und/oder Regeleinheit und/oder die Kommunikationseinheit, insbesondere über die externe Einheit, hinterlegt, insbesondere zu einer Rekonstruktion eines Verfahrensablaufs bei der Gefahrensituation. Es ist denkbar, dass eine erfasste Bewegung der Kettensäge, welche zumindest durch die erfasste Bewegungskenngröße ermittelt wird, in dem virtuellen Modell berücksichtigt wird. Alternativ oder zusätzlich ist denkbar, dass das virtuelle Modell in zumindest einem Verfahrensschritt über die Bedieneinheit einem Bediener ausgegeben wird. Es kann eine vorteilhaft hohe Sicherheit eines Bedieners ermöglicht werden, insbesondere da der Grenzwert zur Betätigung der Bremsvorrichtung vorteilhaft situations- und bedienerspezifisch bestimmt werden kann. Es kann ein vorteilhaft hoher Bedienkomfort der Kettensäge ermöglicht werden. Es kann eine Anpassung des Grenzwerts in Abhängigkeit von einer Bewegung der Kettensäge während eines Betriebs ermöglicht werden, wodurch insbesondere eine unnötiges und/oder ungewolltes Betätigen der Bremseinheit verhindert werden kann.

Des Weiteren wird vorgeschlagen, dass in zumindest einem Verfahrensschritt mittels zumindest einer Steuer- und/oder Regeleinheit der Bremsvorrichtung zumindest ein Grenzwert zu einer Ermittlung der Gefahrensituation, die verschieden ist von einem Zurückschlagen eines Sägeschwerts der Kettensäge, über ein maschinelles Lernverfahren ermittelt wird. Vorzugsweise wird bei dem maschinellen Lernverfahren mittels der Steuer- und/oder Regeleinheit und/oder mittels zumindest einer externen Einheit, insbesondere einem Server, einem Rechenzentrum und/oder einem Netzwerk aus mehreren Kettensägen, eine Vielzahl von hinterlegten Daten, insbesondere Bewegungskenngrößen, Betriebskenngrößen und/oder ermittelten Gefahrensituationen, zu einer Anpassung des Grenzwerts herangezogen. Insbesondere werden bei dem maschinellen Lernverfahren mittels der Steuer- und/oder Regeleinheit und/oder mittels zumindest der externen Einheit die erfasste Bewegungskenngröße, insbesondere der gemittelte Verlauf der erfassten Bewegungskenngröße, zu einer Vielzahl von, insbesondere mindestens 10, vorzugsweise mindestens 50 und besonders bevorzugt mindestens 100, Schnitten der Kettensäge zu einer Anpassung des Grenzwerts herangezogen. Vorzugsweise wird ein Schnitt der Kettensäge mittels der Steuer- und/oder Regeleinheit über die erfasste Bewegungskenngröße, insbesondere der gemittelte Verlauf der erfassten Bewegungskenngröße, und/oder die erfasste Betriebskenngröße definiert und/oder erkannt. Bevorzugt erfolgt das maschinelle Lernverfahren über zumindest einen Algorithmus zur Identifikation der zumindest einen Gefahrensituation, wobei der Algorithmus dazu eingerichtet ist, mittels zumindest einer erfassten Bewegungskenngröße, insbesondere einem gemittelten Verlauf der erfassten Bewegungskenngröße, die Gefahrensituation zu identifizieren und/oder den Grenzwert anzupassen. Vorzugsweise wird dem maschinellen Lernverfahren mittels der Steuer- und/oder Regeleinheit zumindest ein, insbesondere der vorher genannte, Grenzwert vorgegeben, wobei insbesondere der Algorithmus dazu vorgesehen ist, den Grenzwert, vorzugsweise kontinuierlich, anzupassen. Bevorzugt erfolgt das maschinelle Lernverfahren kontinuierlich mit einem Betrieb der Kettensäge. Es ist denkbar, dass in zumindest einem Verfahrensschritt mittels der Steuer- und/oder Regeleinheit über zumindest ein Clustering-Verfahren Daten, insbesondere die zumindest eine erfasste Bewegungskenngröße, den gemittelten Verlauf der zumindest einen Bewegungskenngröße und/oder die zumindest eine erfasste Betriebskenngröße, zur Identifikation der Gefahrensituation in mehrere Gruppen eingeteilt werden, wobei jeder Gruppe zumindest ein charakteristisches Muster der Bewegungskenngröße und/oder dem Verlauf der Bewegungskenngröße zugeordnet wird. Beispielsweise werden die Gruppen mittels der Steuer- und/oder Regeleinheit und/oder mittels eines Bedieners, insbesondere über zumindest ein Bedienelement der Bedieneinheit, nach Bediener, nach zu bearbeitendem Werkstück, nach Art der verwendeten Sägekette und/oder nach einer Verwendungsdauer oder einem Abnutzungsgrad der Sägekette eingeteilt. Insbesondere wird für jede Gruppe mittels der Steuer-und/oder Regeleinheit, insbesondere mittels des Algorithmus, ein unterschiedlicher Grenzwert zu einer Ermittlung der Gefahrensituation bestimmt. Bevorzugterweise erfolgt eine Einteilung der Gruppen und/oder eine Zuteilung einer der Gruppen mittels der Steuer- und/oder Regeleinheit periodisch, kontinuierlich oder zu Beginn eines Betriebs der Kettensäge. Insbesondere erfolgt in zumindest einem Verfahrensschritt die Zuteilung der Gruppen mittels der Steuer- und/oder Regeleinheit, insbesondere über die Sensoreinheit, in Abhängigkeit von der erfassten Bewegungskenngröße, dem gemittelten Verlauf der erfassten Bewegungskenngröße, einer Bedienereingabe und/oder der erfassten Betriebskenngröße. Beispielsweise werden unterschiedliche Bediener der Kettensäge in Abhängigkeit von einem charakteristischen Muster eines gemittelten Verlaufs einer erfassten Bewegungskenngröße in verschiedene Gruppen eingeteilt, wobei insbesondere der Grenzwert in Abhängigkeit einer Gruppe eines momentanen Bedieners der Kettensäge mittels der Steuer- und/oder Regeleinheit angepasst wird. Alternativ oder zusätzlich werden beispielsweise unterschiedliche Arten von Sägeketten, insbesondere bezüglich einer Schärfe der Sägeketten und/oder einer Form der Sägeketten, in unterschiedliche Gruppen eingeteilt, wobei insbesondere der Grenzwert in Abhängigkeit einer Gruppe einer momentan an der Kettensäge befestigten Sägekette mittels der Steuer- und/oder Regeleinheit angepasst wird. Es ist denkbar, dass die Bremsvorrichtung, insbesondere die Steuer- und/oder Regeleinheit, zumindest einen Lernmodus aufweist, wobei insbesondere in dem Lernmodus mittels dem maschinellen Lernverfahren eine Bestimmung des Grenzwerts erfolgt. Vorzugsweise erfolgt in zumindest einem Verfahrensschritt eine Aktivierung und/oder Deaktivierung des Lernmodus in Abhängigkeit von der erfassten Bewegungskenngröße und/oder einer Benutzereingabe, insbesondere mittels des Bedienelements. Bevorzugt wird in zumindest einem Verfahrensschritt in dem Lernmodus der Bediener bei oder nach einem Betätigen der Bremseinheit über das Ausgabeelement und/oder das Bedienelement eine Funktionalität der Bremsvorrichtung abgefragt, wobei insbesondere eine Richtigkeit der ermittelten Gefahrensituation, insbesondere des Betätigens der Bremseinheit, überprüft wird. Beispielsweise wird die Richtigkeit der ermittelten Gefahrensituation, insbesondere des Betätigens der Bremseinheit, mittels der Steuer-und/oder Regeleinheit bei einer Erfassung eines vorgegebenen Betätigungsmusters des Ausgabeelements und/oder des Bedienelements durch den Bediener erkannt. Alternativ oder zusätzlich ist denkbar, dass mittels der Steuer- und/oder Regeleinheit in Abhängigkeit von einer Betätigungsdauer des Ausgabeelements und/oder des Bedienelements die Richtigkeit der ermittelten Gefahrensituation, insbesondere des Betätigens der Bremseinheit, beurteilt wird, wobei beispielsweise bei einem mittels der Steuer- und/oder Regeleinheit und/oder der Sensoreinheit erfassten Zeitintervall einer Betätigungspause des Ausgabeelements und/oder des Bedienelements von weniger als 3 s, vorzugsweise weniger als 2 s und besonders bevorzugt weniger als 1 s, nach einem Betätigen der Bremseinheit eine fehlerhaft identifizierte Gefahrensituation und/oder ein ungewolltes Betätigen der Bremseinheit erkannt wird. Insbesondere wird in zumindest einem Verfahrensschritt in dem Lernmodus mittels der Steuer- und/oder Regeleinheit in Abhängigkeit von der abgefragten Funktionalität, der Algorithmus und/oder der Grenzwert zu einer Ermittlung der Gefahrensituation angepasst. Bevorzugt erfolgt das maschinelle Lernverfahren in dem Lernmodus als aktives Lernverfahren oder als bestärkendes Lernverfahren. Alternativ oder zusätzlich ist denkbar, dass in zumindest einem Verfahrensschritt mittels zumindest einer Kommunikationseinheit der Kettensäge, insbesondere der Bremsvorrichtung, elektronische Daten, insbesondere die erfasste Bewegungskenngröße, die erfasste Betriebskenngröße, der Algorithmus o. dgl., an die externe Einheit übertragen werden und/oder, insbesondere zur Verwendung im maschinellen Lernverfahren vorgesehene, elektronische Daten, insbesondere Werte der Bewegungskenngröße, des Verlaufs der Bewegungskenngröße, der Betriebskenngröße und/oder des Algorithmus, von der externen Einheit empfangen werden. Insbesondere werden in zumindest einem Verfahrensschritt über die Kommunikationseinheit empfangene, insbesondere zur Verwendung im maschinellen Lernverfahren vorgesehene, elektronische Daten mittels der Steuer- und/oder Regeleinheit zu einer Ermittlung des Grenzwerts und/oder zu einer Anpassung des Algorithmus herangezogen. Es kann ein vorteilhaft hoher Bedienkomfort der Kettensäge ermöglicht werden, insbesondere da der Grenzwert zur Bestimmung einer Gefahrensituation einem Verhalten und/oder Arbeitsvorgängen eines Bedieners der Kettensäge angepasst werden kann. Es kann ein ungewolltes Betätigen der Bremseinheit, insbesondere in Abwesenheit von einer Gefahrensituation, durch die Bremsvorrichtung vorteilhaft verhindert werden. Es kann eine vorteilhaft hohe Sicherheit des Bedieners der Kettensäge ermöglicht werden, insbesondere da sich die Bremsvorrichtung an ein Arbeitsverhalten des Bedieners anpassen kann.

Zudem wird vorgeschlagen, dass in zumindest einem Verfahrensschritt mittels zumindest einer, insbesondere der vorher genannten, Steuer- und/oder Regeleinheit der Bremsvorrichtung zumindest ein Grenzwert zu einer Ermittlung der Gefahrensituation, die verschieden ist von einem Zurückschlagen eines Sägeschwerts der Kettensäge, in Abhängigkeit von zumindest einer, insbesondere der vorher genannten, Betriebskenngröße der Kettensäge, insbesondere einer Drehzahl einer Antriebseinheit oder einer Sägekette der Kettensäge, bestimmt wird. Vorzugsweise wird die Betriebskenngröße in zumindest einem Verfahrensschritt, insbesondere periodisch oder kontinuierlich, mittels zumindest einem, insbesondere dem vorher genannten, weiteren Sensorelement der Sensoreinheit erfasst. Bevorzugt erfolgt in zumindest einem Verfahrensschritt mittels der Steuer-und/oder Regeleinheit eine Bestimmung der Bewegung der Gehäuseeinheit und/oder des Sägeschwerts der Kettensäge in Abhängigkeit von der Betriebskenngröße. Beispielsweise erfolgt mittels der Steuer- und/oder Regeleinheit eine Ermittlung eines Kontakts der Sägekette mit dem Werkstück in Abhängigkeit von der Betriebskenngröße. Insbesondere erfolgt in zumindest einem Verfahrensschritt mittels der Steuer- und/oder Regeleinheit eine Ermittlung der Vorschubrichtung der Kettensäge in Abhängigkeit von der Betriebskenngröße und zumindest einer erfassten Bewegungskenngröße. Es ist denkbar, dass in dem maschinellen Lernverfahren die Betriebskenngröße zu einer Erfassung einer Art der Sägekette oder einer Abnutzung der Sägekette, zu einer Bestimmung eines Bedieners der Kettensäge und/oder zu einer Ermittlung einer Art des Werkstücks herangezogen wird. Beispielsweise ist denkbar, dass mittels der Steuer-und/oder Regeleinheit in dem maschinellen Lernverfahren die Art des Werkstücks über eine Drehzahl der Antriebseinheit bei einem Schnitt durch das Werkstück, über eine Geschwindigkeit des Sägeschwerts in Vorschubrichtung und über eine Auswertung von mittels der Sensoreinheit erfassten Daten, beispielsweise einem Bild, des Werkstücks ermittelt wird. Beispielsweise ist denkbar, dass mittels der Steuer- und/oder Regeleinheit eine Abnutzung der Sägekette über eine Auswertung eines Verlaufs der Drehzahl der Antriebseinheit und/oder einer Geschwindigkeit der Vorschubbewegung des Sägeschwerts bei einem Schnitt der Kettensäge durch das Werkstück über zumindest ein Zeitintervall bestimmt wird. Es ist denkbar, dass in zumindest einem Verfahrensschritt eine Identifikation der Gefahrensituation, die verschieden ist von einem Zurückschlagen eines Sägeschwerts der Kettensäge, mittels der Steuer- und/oder Regeleinheit in Abhängigkeit von der Betriebskenngröße erfolgt, wobei insbesondere der Grenzwert bei einer Überschreitung eines Betriebskenngrößengrenzwerts angepasst wird. Beispielsweise wird bei einem spontanen Anstieg der Drehzahl der Antriebseinheit der Grenzwert zu einer Ermittlung der Gefahrensituation mittels der Steuer-und/oder Regeleinheit angepasst, insbesondere um, vorzugsweise in die Rich-tung der momentanen Vorschubbewegung, ein Durchschwingen der Kettensäge identifizieren zu können. Es kann eine vorteilhaft genaue Identifizierung von Gefahrensituationen ermöglicht werden, insbesondere da über die Betriebskenngröße ein Sägevorgang der Kettensäge vorteilhaft überwacht werden kann. Es kann ein vorteilhaft hoher Bedienkomfort der Kettensäge erreicht werden, insbesondere da ein unnötiges und/oder ungewolltes Betätigen der Bremseinheit durch die Bremsvorrichtung verhindert werden kann.

Ferner wird vorgeschlagen, dass in zumindest einem Verfahrensschritt mittels zumindest einer, insbesondere der vorher genannten, Steuer- und/oder Regeleinheit der Bremsvorrichtung zumindest ein Grenzwert zu einer Ermittlung der Gefahrensituation, die verschieden ist von einem Zurückschlagen eines Sägeschwerts der Kettensäge, in Abhängigkeit von einer durch den Bediener, insbesondere mittels der Bedieneinheit der Bremsvorrichtung, vorgenommenen Einstellung bestimmt wird. Bevorzugt erfolgt in zumindest einem Verfahrensschritt eine Auswahl der Einstellung durch den Bediener mittels des Bedienelements, des Ausgabeelements und/oder eines weiteren Bedienelements der Bedieneinheit. Vorzugsweise wird in zumindest einem Verfahrensschritt, insbesondere mittels der Steuer- und/oder Regeleinheit, jeder möglichen Einstellung zumindest ein Grenzwert zu einer Ermittlung der Gefahrensituation zugeordnet. Bevorzugt weisen die verschiedenen möglichen Einstellungen jeweils unterschiedliche Werte für einer Bewegungskenngröße zugeordnete Grenzwerte zu einer Ermittlung der Gefahrensituation auf. Es ist denkbar, dass die Einstellungen, insbesondere die den Einstellungen zugeordneten Grenzwerte, derart ausgebildet sind, dass bei einem Durchschalten der Einstellungen durch den Bediener, insbesondere in einer durch die Bedieneinheit vorgegebenen Reihenfolge der Einstellungen, der Grenzwert zu einer Ermittlung der Gefahrensituation schrittweise erhöht wird. Insbesondere sind die Einstellungen als Sensitivitätseinstellungen der Bremsvorrichtung ausgebildet. Insbesondere in einer Ausgestaltung des Verfahrens, bei der eine Ermittlung des Grenzwerts zu einer Ermittlung der Gefahrensituation über das maschinelle Lernverfahren erfolgt, ist denkbar, dass in zumindest einem Verfahrensschritt mittels der Steuer- und/oder Regeleinheit zumindest einer, insbesondere alle, der den Einstellungen zugeordneten Grenzwerte über den Algorithmus angepasst wird. Es kann eine vorteilhaft einfache und schnelle Anpassung der Bremsvorrichtung an Bedürfnisse des Bedieners ermöglicht werden. Es kann eine vorteilhaft hohe Sicherheit des Bedieners der Kettensäge ermöglicht werden, insbesondere da die Bremsvorrichtung an ein Arbeitsverhalten des Bedieners angepasst werden kann.

Die erfindungsgemäße Bremsvorrichtung, die erfindungsgemäße Kettensäge und/oder das erfindungsgemäße Verfahren sollen/soll hierbei nicht auf die oben beschriebene Anwendung und Ausführungsform beschränkt sein. Insbesondere können/kann die erfindungsgemäße Bremsvorrichtung, die erfindungsgemäße Kettensäge und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Kettensäge mit einer erfindungsgemäßen Bremsvorrichtung,
- Fig. 2: eine Detailansicht der erfindungsgemäßen Bremsvorrichtung in einer schematischen Darstellung in einem Bereich einer Aktuierungseinheit der Bremsvorrichtung mit zwei Auslöseelementen der Aktuierungseinheit,
- Fig. 3: eine schematische Darstellung eines Ablaufs eines erfindungsgemäßen Verfahrens zum Schutz eines Bedieners der erfindungsgemäßen Kettensäge mittels der erfindungsgemäßen Bremsvorrichtung,
- Fig. 4: eine schematische Darstellung von beispielhaften Verläufen einer mittels einer Sensoreinheit der erfindungsgemäßen Bremsvorrichtung erfassten, als Winkelgeschwindigkeit ausgebildeten Bewegungskenngröße zu einer Ermittlung einer Gefahrensituation bei einem Durchschwingen der erfindungsgemäßen Kettensäge,
- Fig. 5: eine schematische Darstellung von beispielhaften Verläufen der mittels der Sensoreinheit der erfindungsgemäßen Bremsvorrichtung erfassten, als Winkelgeschwindigkeit ausgebildeten Bewegungskenngröße zu einer Ermittlung einer Gefahrensituation bei einem Durchschwingen einer erfindungsgemäßen Kettensäge und bei einem Zurückschlagen eines Sägeschwerts der Kettensäge,
- Fig. 6: eine schematische Darstellung einer Aktuierungseinheit und einer Bremseinheit einer ersten alternativen Ausgestaltung einer erfindungsgemäßen Bremsvorrichtung mit einem Auslöseelement der Aktuierungseinheit,
- Fig. 7: eine Detailansicht einer zweiten alternativen Ausgestaltung einer erfindungsgemäßen Bremsvorrichtung in einer schematischen Darstellung in einem Bereich einer Aktuierungseinheit der Bremsvorrichtung mit einem Auslöseelement der Aktuierungseinheit und
- Fig. 8: eine Detailansicht einer dritten alternativen Ausgestaltung einer erfindungsgemäßen Bremsvorrichtung in einer schematischen Darstellung in einem Bereich einer Aktuierungseinheit der Bremsvorrichtung mit zwei Aktuierungselementen der Aktuierungseinheit.

### Beschreibung der Ausführungsbeispiele

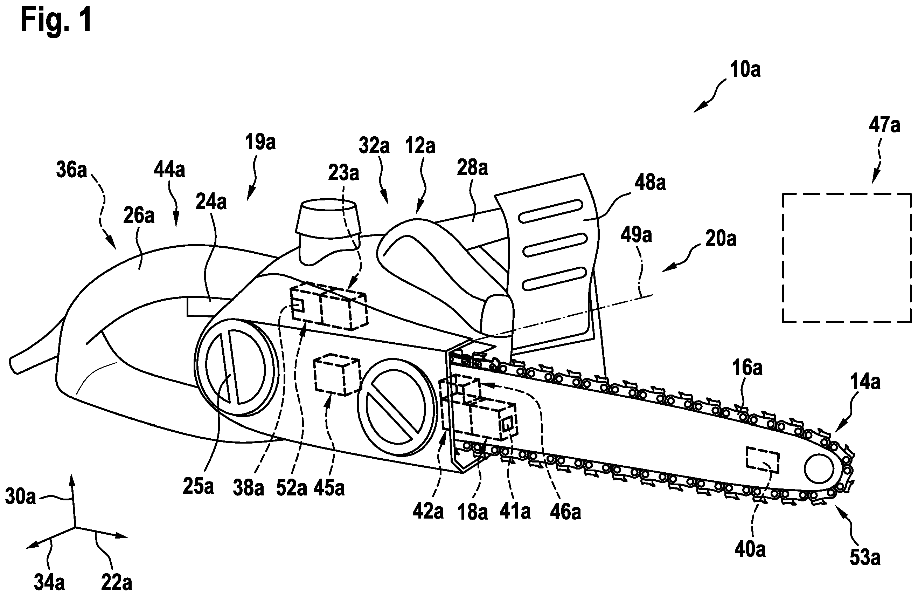

Die Figur 1 zeigt eine, insbesondere handgeführte, Kettensäge 10a, die eine Gehäuseeinheit 12a, ein Sägeschwert 14a, eine um das Sägeschwert 14a gespannte Sägekette 16a, eine Antriebseinheit 18a, eine Betätigungseinheit 19a und eine Bremsvorrichtung 20a aufweist. Die Antriebseinheit 18a und die Bremsvorrichtung 20a sind innerhalb der Gehäuseeinheit 12a angeordnet. Das Sägeschwert 14a ist an der Gehäuseeinheit 12a und der Antriebseinheit 18a befestigt und insbesondere wechselbar ausgebildet. Insbesondere ist die Antriebseinheit 18a zumindest teilweise als ein Elektromotor oder als ein Verbrennungsmotor ausgebildet. Das Sägeschwert 14a erstreckt sich von der Gehäuseeinheit 12a in eine x-Richtung 22a. Die Sägekette 16a ist über das Sägeschwert 14a geführt und mittels der Antriebseinheit 18a antreibbar. Die Kettensäge 10a umfasst eine Elektronikeinheit 23a. Die Betätigungseinheit 19a umfasst ein Betätigungselement 24a, über das die Elektronikeinheit 23a zu einer Steuerung und/oder Regelung der Antriebseinheit 18a durch einen Bediener der Kettensäge 10a betätigt werden kann. Das Betätigungselement 24a ist an einem Griffelement 26a der Gehäuseeinheit 12a angeordnet. Die Gehäuseeinheit 12a umfasst ein weiteres Griffelement 28a, das an einer in eine y-Richtung 30a ausgerichteten Oberseite 32a der Gehäuseeinheit 12a angeordnet ist, wobei das weitere Griffelement 28a eine Längsachse aufweist, die zumindest im Wesentlichen parallel zu einer z-Richtung 34a verläuft. Insbesondere sind die x-Richtung 22a, die y-Richtung 30a und die z-Richtung 34a analog zu Achsen eines kartesischen Koordinatensystems zueinander angeordnet. Die x-Richtung 22a, die y-Richtung 30a und die z-Richtung 34a sind vektorartig ausgebildet und weisen den gleichen Ortsvektor auf. Vorzugsweise sind die x-Richtung 22a, die y-Richtung 30a und die z-Richtung 34a derart angeordnet, dass die x-Richtung 22a, die y-Richtung 30a und die z-Richtung 34a jeweils einen Winkel von 90° zueinander aufweisen. Vorzugsweise verläuft die x-Richtung 22a zumindest im Wesentlichen parallel zu einer Haupterstreckungsachse des Sägeschwerts 14a. Die Bremsvorrichtung 20a umfasst eine Sensoreinheit 36a, die ein als Gyroskop ausgebildetes Sensorelement 38a und ein als Beschleunigungssensor ausgebildetes anderes Sensorelement 40a zu einer Erfassung von einer Bewegungskenngröße der Kettensäge 10a aufweist. Insbesondere ist das Sensorelement 38a zu einer Erfassung einer als Winkelgeschwindigkeit ausgebildeten Bewegungskenngröße der Kettensäge 10a vorgesehen. Bevorzugt ist das andere Sensorelement 40a zu einer Erfassung einer als Beschleunigung ausgebildeten Bewegungskenngröße der Kettensäge 10a vorgesehen. Es sind jedoch auch andere Ausgestaltungen der Sensoreinheit 36a, insbesondere des Sensorelements 38a und/oder des anderen Sensorelements 40a, denkbar, beispielsweise als, insbesondere mechanischer, Trägheitssensor, als Annäherungssensor, als Ultraschallsensor, als Kamera, als Infrarotsensor, als Spannungssensor o. dgl. Die Bremsvorrichtung 20a umfasst eine Bremseinheit 42a zu einem Abbremsen und/oder Entkoppeln der Sägekette 16a der Kettensäge 10a und eine Bedieneinheit 44a zu einer Interaktion mit dem Bediener, wobei die Bedieneinheit 44a ein Bedienelement 25a aufweist. Die Bremsvorrichtung 20a umfasst eine Kommunikationseinheit 45a zur, insbesondere kabellosen, Datenübertragung mit einer externen Einheit 47a, insbesondere einem Server, einer Cloud oder einer anderen Kettensäge 10a. Die Bremsvorrichtung 20a umfasst eine Aktuierungseinheit 46a, die dazu vorgesehen ist, zumindest in Abhängigkeit von der erfassten Bewegungskenngröße die Bremseinheit 42a zu betätigen und ein als Sicherheitsbedienelement, insbesondere Rückschlag-Hebel, ausgebildetes bewegbares Ausgabeelement 48a der Bedieneinheit 44a, welches dem Bediener einen betätigten Zustand der Bremseinheit 42a ausgibt, zu aktivieren. Die Aktuierungseinheit 46a ist dazu vorgesehen, in Abhängigkeit von zumindest einer zumindest über die erfasste Bewegungskenngröße ermittelten Gefahrensituation, die verschieden ist von einem Zurückschlagen eines Sägeschwerts 14a der Kettensäge 10a, die Bremseinheit 42a zu betätigen und das Ausgabeelement 48a zu aktivieren.

Das Ausgabeelement 48a ist schwenkbar an der Gehäuseeinheit 12a gelagert und verdeckt das weitere Griffelement 28a in eine entgegen die x-Richtung 22a ausgerichtete Richtung zumindest größtenteils. Eine Lagerachse 49a des Ausgabeelements 48a ist zumindest im Wesentlichen parallel zum weiteren Griffelement 28a, insbesondere zu der Längsachse des weiteren Griffelements 28a, angeordnet. Das Ausgabeelement 48a ist dazu vorgesehen, dem Bediener über ein zumindest optisches Signal, insbesondere eine Bewegung des Ausgabeelements 48a in eine Sperrposition, den betätigten Zustand der Bremseinheit 42a auszugeben. Das Ausgabeelement 48a ist dazu vorgesehen, insbesondere nach einem Betätigen der Bremseinheit 42a und einem Aktivieren des Ausgabeelements 48a, bei einem weiteren oder wiederholten Betätigen des Ausgabeelements 48a, insbesondere einer Bewegung des Ausgabeelements 48a von der Sperrposition in eine Grundposition, welche in Figur 1 gezeigt ist, die Bremseinheit 42a zu lösen, wobei insbesondere die Sägekette 16a und/oder ein Antriebselement 50a der Antriebseinheit 18a freigegeben werden/wird und/oder die Sägekette 16a mit der Antriebseinheit 18a gekoppelt wird. Insbesondere ist das Ausgabeelement 48a dazu vorgesehen, bei einem Aktivieren des Ausgabeelements 48a durch die Aktuierungseinheit 46a um die Lagerachse 49a, insbesondere um eine entlang der z-Richtung 34a verlaufende Achse in die Sperrposition geschwenkt zu werden. Die Aktuierungseinheit 46a ist dazu vorgesehen, das Ausgabeelement 48a zu einer Ausgabe des betätigten Zustands der Bremseinheit 42a in die Sperrposition zu bewegen. Das Ausgabeelement 48a ist federbelastet an der Gehäuseeinheit 12a angeordnet, wobei insbesondere bei einer Aktivierung des Ausgabeelements 48a das Ausgabeelement 48a in die Sperrposition bewegt wird. Es sind jedoch auch andere Ausgestaltungen des Ausgabeelements 48a denkbar, insbesondere als Display, wie beispielsweise als Touch-Display, als LCD, als OLED o. dgl., als akustisches Ausgabeelement, als Druckknopf o. dgl., wobei insbesondere dem Bediener der betätigte Zustand der Bremseinheit 42a über ein haptisches, optisches und/oder akustisches Signal ausgegeben wird.

Insbesondere ist die Gefahrensituation, die verschieden ist von einem Zurückschlagen des Sägeschwerts 14a der Kettensäge 10a, als ein Abrutschen der Kettensäge 10a, insbesondere des Sägeschwerts 14a der Kettensäge 10a, von einem zu bearbeitenden Werkstück, welches insbesondere in der Figur 1 nicht gezeigt ist, als ein Herunterfallen der Kettensäge 10a, als ein Durchschwingen der Kettensäge 10a nach einem Durchtrennen eines Werkstücks, ein sogenannter Run-through, als eine durch eine äußere Kraft, wie beispielsweise durch ein Werkstück oder einen Tritt, ausgelöste Bewegung, insbesondere Drehbewegung, der Kettensäge 10a, als Bewegung der Kettensäge 10a durch einen Verlust eines sicheren Stands des Bedieners o. dgl. ausgebildet. Insbesondere wird die Kettensäge 10a, insbesondere das Sägeschwert 14a mit der Sägekette 16a, bei dem Zurückschlagen des Sägeschwerts 14a in y-Richtung 30a und/oder um eine zumindest im Wesentlichen parallel zur z-Richtung 34a ausgerichtete Achse beschleunigt. Insbesondere erfolgt bei dem Durchschwingen der Kettensäge 10a eine Beschleunigung der Kettensäge 10a, insbesondere des Sägeschwerts 14a, in eine Vorschubrichtung der Kettensäge 10a, vorzugsweise entlang einer zumindest im Wesentlichen parallel zur y-Richtung 30a ausgerichteten Achse und/oder um eine zumindest im Wesentlichen parallel zur z-Richtung 34a ausgerichteten Achse. Beispielsweise bei einem Herunterfallen der Kettensäge 10a, erfolgt, je nach einer vorherigen Ausrichtung der Kettensäge 10a eine Beschleunigung der Kettensäge 10a in zumindest eine Richtung. Vorzugsweise ist zumindest ein Rückschlaggrenzwert der Bewegungskenngröße, der zu einer Erkennung des Zurückschlagens des Sägeschwerts 14a vorgesehen ist, größer als zumindest ein Grenzwert der Bewegungskenngröße, der zu einer Erkennung der, von dem Zurückschlagen des Sägeschwerts 14a verschiedenen Gefahrensituation, vorzugsweise einem Durchschwingen der Kettensäge 10a, vorgesehen ist.

Das Sensorelement 38a ist innerhalb der Gehäuseeinheit 12a der Kettensäge 10a, insbesondere in einem Nahbereich eines Masseschwerpunkts und/oder der Elektronikeinheit 23a der Kettensäge 10a, angeordnet. Das andere Sensorelement 40a ist an dem Sägeschwert 14a, insbesondere in einem von der Gehäuseeinheit 12a abgewandten Endbereich 53a der Kettensäge 10a angeordnet. Die Sensoreinheit 36a der Bremsvorrichtung 20a weist ein weiteres Sensorelement 41a auf, das dazu vorgesehen ist, zumindest eine Betriebskenngröße der Kettensäge 10a, insbesondere der Antriebseinheit 18a, zu erfassen. Vorzugsweise ist die Betriebskenngröße beispielsweise als momentane oder gemittelte Drehzahl, als ein momentaner oder gemittelter Energieverbrauch der Antriebseinheit 18a, als eine momentane oder gemittelte Geschwindigkeit der Sägekette 16a o. dgl. ausgebildet. Das weitere Sensorelement 41a ist innerhalb der Gehäuseeinheit 12a an der Antriebseinheit 18a angeordnet. Es sind aber auch andere Anordnungen der Sensorelemente 38a, 40a, 41a denkbar, beispielsweise innerhalb oder an einem der Griffelemente 26a, 28a. Es sind jedoch auch andere Ausgestaltungen der Sensoreinheit 36a denkbar, wobei insbesondere die Sensoreinheit 36a eine von Drei verschiedene Anzahl an Sensorelementen 38a, 40a, 41a, beispielsweise lediglich ein Sensorelement 38a zur Erfassung der Bewegungskenngröße, aufweist.

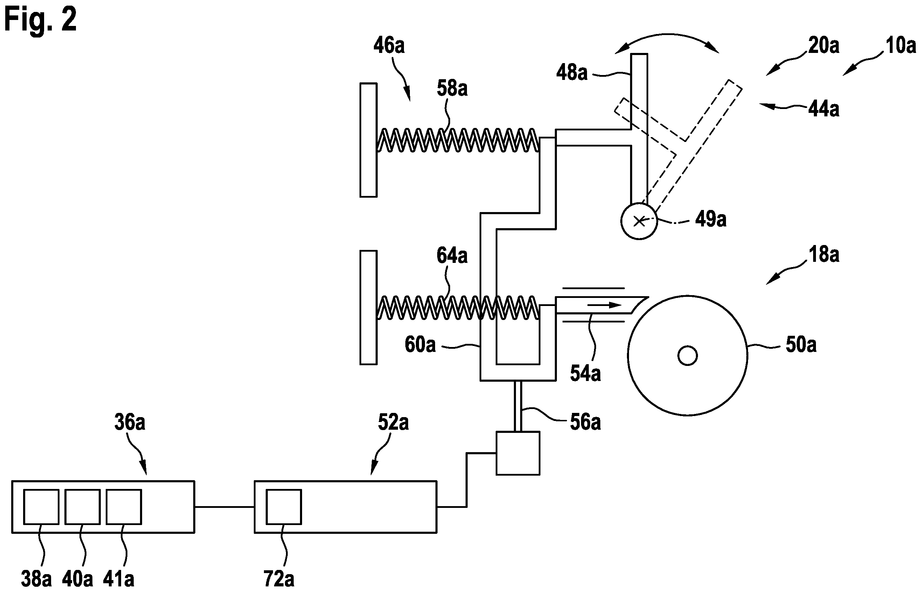

In der Figur 2 ist die Bremsvorrichtung 20a der Kettensäge 10a schematisch in einer Detailansicht gezeigt. Die Bremsvorrichtung 20a umfasst eine Steuer-und/oder Regeleinheit 52a, die insbesondere als Teil der Elektronikeinheit 23a der Kettensäge 10a ausgebildet ist. Die Sensoreinheit 36a ist elektrisch mit der Steuer- und/oder Regeleinheit 52a verbunden. Die Steuer- und/oder Regeleinheit 52a ist dazu eingerichtet, die Gefahrensituation in Abhängigkeit von der erfassten Bewegungskenngröße zu ermitteln. Die Steuer- und/oder Regeleinheit 52a ist insbesondere dazu eingerichtet, zu einer Ermittlung der Gefahrensituation, die erfasste Bewegungskenngröße mit dem zumindest einen Grenzwert der Bewegungskenngröße, welcher zu einer Erkennung der, von dem Zurückschlagen des Sägeschwerts 14a verschiedenen Gefahrensituation vorgesehen ist, zu vergleichen. Insbesondere ist die Steuer- und/oder Regeleinheit 52a dazu eingerichtet, bei einer Überschreitung des Grenzwerts der Bewegungskenngröße die zumindest eine Gefahrensituation zu ermitteln. Bevorzugt ist die Steuer- und/oder Regeleinheit 52a dazu eingerichtet, bei einer Ermittlung der zumindest einen Gefahrensituation die Aktuierungseinheit 46a zu einem Betätigen der Bremseinheit 42a und zu einer Aktivierung des Ausgabeelements 48a anzusteuern. Bevorzugterweise ist die Steuer- und/oder Regeleinheit 52a dazu eingerichtet, die erfasste Bewegungskenngröße, insbesondere in Abhängigkeit von der ermittelten Gefahrensituation, periodisch oder kontinuierlich in einer Speichereinheit 72a der Steuer- und/oder Regeleinheit 52a zu hinterlegen. Bevorzugt sind die Steuer-und/oder Regeleinheit 52a und die Sensoreinheit 36a dazu vorgesehen und/oder eingerichtet, innerhalb von höchstens 45 ms die Gefahrensituation, die verschieden ist von einem Zurückschlagen des Sägeschwerts 14a der Kettensäge 10a, zu erfassen, zu ermitteln und die Aktuierungseinheit 46a anzusteuern. Besonders bevorzugt sind in der Steuer- und/oder Regeleinheit 52a eine Vielzahl von Grenzwerten hinterlegt, wobei insbesondere jeder Gefahrensituation einer Vielzahl von Gefahrensituationen, die verschieden ist von einem Zurückschlagen eines Sägeschwerts 14a der Kettensäge 10a, zumindest ein Grenzwert zugeordnet ist. Vorzugsweise ist die Steuer- und/oder Regeleinheit 52a dazu eingerichtet, in Abhängigkeit von den hinterlegten Grenzwerten und der erfassten Bewegungskenngröße zumindest eine Gefahrensituation zu identifizieren.

Die Bremseinheit 42a ist dazu vorgesehen, bei einem Betätigen durch die Aktuierungseinheit 46a, die Sägekette 16a und/oder das Antriebselement 50a der Antriebseinheit 18a der Kettensäge 10a abzubremsen und/oder die Sägekette 16a von der Antriebseinheit 18a der Kettensäge 10a zu entkoppeln. Die Bremseinheit 42a ist zumindest teilweise als Formschlussbremse ausgebildet, wobei insbesondere bei einem Betätigen der Bremseinheit 42a ein Bremselement 54a der Bremseinheit 42a form- und kraftschlüssig an dem Antriebselement 50a angreift. Das Bremselement 54a ist dazu vorgesehen, das Antriebselement 50a der Antriebseinheit 18a und die Sägekette 16a abzubremsen. Das Bremselement 54a ist als Kontaktbolzen ausgebildet. Es sind jedoch auch andere Ausgestaltungen des Bremselements 54a denkbar, beispielsweise als Schlingfeder, als Bremsband, als Elektromagnet, als Rastelement o. dgl. Bevorzugterweise ist die Bremseinheit 42a dazu vorgesehen, innerhalb von höchstens 40 ms nach einem Betätigen der Bremseinheit 42a durch die Aktuierungseinheit 46a, die Sägekette 16a zu stoppen.

Die Steuer- und/oder Regeleinheit 52a ist dazu eingerichtet, bei einem Überschreiten eines Grenzwerts eines mittels der Sensoreinheit 36a erfassten Signals der, insbesondere als Winkelgeschwindigkeit ausgebildeten, erfassten Bewegungskenngröße von mindestens 200°/s die Gefahrensituation, die verschieden ist von einem Zurückschlagen des Sägeschwerts 14a der Kettensäge 10a, zu identifizieren und die Aktuierungseinheit 46a anzusteuern. Insbesondere beträgt der Grenzwert des mittels der Sensoreinheit 36a erfassten Signals der, insbesondere als Winkelgeschwindigkeit ausgebildeten, erfassten Bewegungskenngröße höchstens 540°/s. Vorzugsweise ist der Grenzwert des mittels der Sensoreinheit 36a erfassten Signals zu einer Identifikation des Durchschwingens der Kettensäge 10a vorgesehen. Die Steuer- und/oder Regeleinheit 52a ist dazu eingerichtet, den Grenzwert des mittels der Sensoreinheit 36a erfassten Signals unabhängig von einer Richtung der erfassten Winkelbeschleunigung zu einer Identifikation der Gefahrensituation zu verwenden. Die Steuer- und/oder Regeleinheit 52a ist dazu eingerichtet, bei einem Überschreiten eines weiteren Grenzwerts des mittels der Sensoreinheit 36a erfassten Signals der, insbesondere als Beschleunigung ausgebildeten, erfassten Bewegungskenngröße von mindestens 1 g, die Gefahrensituation, die verschieden ist von einem Zurückschlagen eines Sägeschwerts 14a der Kettensäge 10a, zu identifizieren und die Aktuierungseinheit 46a anzusteuern, wobei insbesondere g = 9,81 m/s² die Konstante der Erdbeschleunigung nahe der Erdoberfläche ist. Der weitere Grenzwert des mittels der Sensoreinheit 36a erfassten Signals der, insbesondere als Beschleunigung ausgebildeten, erfassten Bewegungskenngröße beträgt höchstens 3 g.

Die Aktuierungseinheit 46a weist ein Aktuierungselement 56a zu einem Betätigen der Bremseinheit 42a und einem Aktivieren des Ausgabeelements 48a auf, wobei das Aktuierungselement 56a zumindest teilweise aus einem Formgedächtnismaterial gebildet ist. Das Formgedächtnismaterial ist als eine Formgedächtnislegierung ausgebildet. Es ist jedoch auch denkbar, dass das Formgedächtnismaterial als ein Formgedächtnispolymer ausgebildet ist. Das Aktuierungselement 56a ist dazu vorgesehen, in zumindest einem ersten Formzustand des Aktuierungselements 56a, insbesondere einem unangeregten Zustand, die Bremseinheit 42a in einem unbetätigten Zustand zu halten. Das Aktuierungselement 56a ist dazu vorgesehen, durch einen Übergang von dem ersten Formzustand in den zweiten Formzustand die Bremseinheit 42a zu betätigen und das Ausgabeelement 48a zu aktivieren. Die Bremsvorrichtung 20a umfasst ein erstes Auslöseelement 58a und ein zweites Auslöseelement 64a. Die Aktuierungseinheit 46a ist dazu vorgesehen, das Ausgabeelement 48a mechanisch entkoppelt von einem Betätigen der Bremseinheit 42a zu aktivieren. Die Aktuierungseinheit 46a ist derart ausgebildet, dass zumindest eine mittels der Aktuierungseinheit 46a aufgebrachte Kraft zum Aktivieren des Ausgabeelements 48a verschieden ist von einer mittels der Aktuierungseinheit 46a aufgebrachten weiteren Kraft zur Betätigung der Bremseinheit 42a. Das Ausgabeelement 48a und die Bremseinheit 42a sind, insbesondere beim Betätigen der Bremseinheit 42a und/oder Aktivieren des Ausgabeelements 48a, mechanisch getrennt voneinander ausgebildet. Die Aktuierungseinheit 46a ist derart ausgebildet, dass die Betätigung der Bremseinheit 42a zumindest im Wesentlichen gleichzeitig mit der Aktivierung des Ausgabeelements 48a erfolgt.

Das Aktuierungselement 56a ist dazu vorgesehen, insbesondere bei einem Ansteuern der Aktuierungseinheit 46a durch die Steuer- und/oder Regeleinheit 52a, das erste Auslöseelement 58a und das zweite Auslöseelement 64a der Aktuierungseinheit 46a über zumindest einen Formzustandsübergang zu aktivieren und/oder freizugeben. Das Aktuierungselement 56a ist elektrisch mit der Steuer-und/oder Regeleinheit 52a verbunden. Insbesondere ist die Steuer- und/oder Regeleinheit 52a dazu eingerichtet, bei einer Ansteuerung der Aktuierungseinheit 46a das Aktuierungselement 56a mit einem elektrischen Signal anzuregen. Es sind aber auch andere Ausgestaltungen der Steuer- und/oder Regeleinheit 52a und/oder des Aktuierungselements 56a denkbar.

Die Aktuierungseinheit 46a umfasst ein Koppelelement 60a, welches dazu vorgesehen ist, das Aktuierungselement 56a mit dem ersten Auslöseelement 58a und dem zweiten Auslöseelement 64a in zumindest einem Betriebszustand der Aktuierungseinheit 46a kraft- und/oder formschlüssig zu verbinden. Insbesondere zieht sich das Aktuierungselement 56a bei einer Anregung durch die Steuer-und/oder Regeleinheit 52a zumindest entlang einer Längsachse des Aktuierungselements 56a zusammen, wobei insbesondere das mit dem Aktuierungselement 56a verbundene Koppelelement 60a bewegt wird. Das erste Auslöseelement 58a ist dazu vorgesehen, bei einer Ansteuerung der Aktuierungseinheit 46a durch eine Steuer- und/oder Regeleinheit 52a der Bremsvorrichtung 20a die Bremseinheit 42a, insbesondere ein Bremselement 54a der Bremseinheit 42a, zu betätigen und das zweite Auslöseelement 64a ist dazu vorgesehen, das Ausgabeelement 48a zu aktivieren. Insbesondere ist das aktivierte und/oder mit einer Auslösekraft beaufschlagte Bremselement 54a dazu vorgesehen, die Sägekette 16a und/oder ein Antriebselement 50a einer Antriebseinheit 18a der Kettensäge 10a zu bremsen und/oder die Sägekette 16a von der Antriebseinheit 18a zu entkoppeln. Vorzugsweise ist das zweite Auslöseelement 64a dazu vorgesehen, bei einer Ansteuerung der Aktuierungseinheit 46a durch die Steuer- und/oder Regeleinheit 52a das Ausgabeelement 48a der Bedieneinheit 44a zu aktivieren und/oder mit einer Auslösekraft zu beaufschlagen, wobei insbesondere das aktivierte und/oder mit der Auslösekraft beaufschlagte Ausgabeelement 48a dazu vorgesehen ist, insbesondere über eine Bewegung des Ausgabeelements 48a, einem Bediener einen betätigten Zustand der Bremseinheit 42a auszugeben. Das erste Auslöseelement 58a und das zweite Auslöseelement 64a sind als Federelement ausgebildet. Das erste Auslöseelement 58a und das zweite Auslöseelement 64a sind in zumindest einem unaktivierten Zustand der Aktuierungseinheit 46a über das Koppelelement 60a der Aktuierungseinheit 46a entgegen einer Federkraft vorgespannt. Das Koppelelement 60a ist als Schieber ausgebildet. Das Koppelelement 60a ist dazu vorgesehen, bei einem Ansteuern der Aktuierungseinheit 46a, insbesondere durch eine Aktuierung durch das Aktuierungselement 56a, das erste Auslöseelement 58a und das zweite Auslöseelement 64a freizugeben, wobei insbesondere die Bremseinheit 42a betätigt und das Ausgabeelement 48a aktiviert wird. Es sind jedoch auch andere Ausgestaltungen des ersten Auslöseelements 58a und/oder des zweiten Auslöseelements 64a denkbar, insbesondere unabhängig von dem Koppelelement 60a, wobei insbesondere das erste Auslöseelement 58a und/oder das zweite Auslöseelement 64a beispielsweise als Elektromagnet, als Pneumatikelement, als Hydraulikelement, als Piezoelement o. dgl. ausgebildet sind/ist.

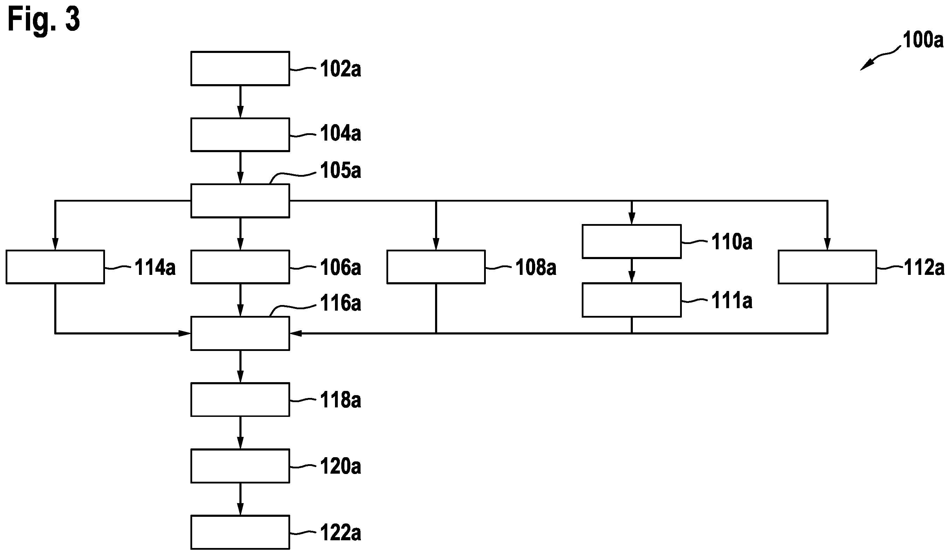

In der Figur 3 ist ein Ablauf eines Verfahrens 100a zum Schutz eines Bedieners der Kettensäge 10a, insbesondere der handgeführten Kettensäge 10a, mittels der Bremsvorrichtung 20a der Kettensäge 10a gezeigt. In zumindest einem Verfahrensschritt 102a des Verfahrens 100a wird zumindest eine Bewegungskenngröße der Kettensäge 10a mittels der Sensoreinheit 36a der Bremsvorrichtung 20a erfasst. Bevorzugt erfolgen in zumindest einem Verfahrensschritt des Verfahrens 100a, insbesondere in dem Verfahrensschritt 102a, eine Erfassung der Bewegungskenngröße der Kettensäge 10a mittels der Sensoreinheit 36a kontinuierlich. Vorzugsweise wird in zumindest einem Verfahrensschritt des Verfahrens 100a, insbesondere in dem Verfahrensschritt 102a, eine Betriebskenngröße der Kettensäge 10a, insbesondere eine Drehzahl der Antriebseinheit 18a oder der Sägekette 16a der Kettensäge 10a, periodisch oder kontinuierlich mittels dem weiteren Sensorelement 41a der Sensoreinheit 36a erfasst.

Bevorzugterweise erfolgt in zumindest einem weiteren Verfahrensschritt 104a des Verfahrens 100a, eine Ermittlung der Gefahrensituation, die verschieden ist von einem Zurückschlagen des Sägeschwerts 14a der Kettensäge 10a, mittels der Steuer- und/oder Regeleinheit 52a über einen Vergleich der erfassten Bewegungskenngröße mit zumindest einem Grenzwert der Bewegungskenngröße, wobei insbesondere bei einem Über- oder Unterschreiten des Grenzwerts der Bewegungskenngröße durch die erfasste Bewegungskenngröße eine Identifikation der Gefahrensituation erfolgt. In zumindest einem weiteren Verfahrensschritt 105a des Verfahrens 100a wird mittels der Steuer- und/oder Regeleinheit 52a der Bremsvorrichtung 20a zumindest ein Grenzwert zu einer Ermittlung der Gefahrensituation, die verschieden ist von einem Zurückschlagen des Sägeschwerts 14a der Kettensäge 10a, dynamisch in Abhängigkeit von zumindest einem gemittelten Verlauf der erfassten Bewegungskenngröße bestimmt. Insbesondere erfolgt eine Ermittlung der Gefahrensituation, die verschieden ist von einem Zurückschlagen eines Sägeschwerts 14a der Kettensäge 10a, mittels der Steuer-und/oder Regeleinheit 52a kontinuierlich. In zumindest einem Verfahrensschritt des Verfahrens 100a, insbesondere in dem Verfahrensschritt 105a, die erfasste Bewegungskenngröße mittels der Steuer- und/oder Regeleinheit 52a kontinuierlich oder periodisch in der Speichereinheit 72a der Steuer- und/oder Regeleinheit 52a hinterlegt, wobei insbesondere der gemittelte Verlauf mittels der Steuer-und/oder Regeleinheit 52a aus den hinterlegten Bewegungskenngrößen zumindest eines vergangenen Zeitintervalls bestimmt wird. Vorzugsweise wird eine Größe des vergangenen Zeitintervalls mittels der Steuer- und/oder Regeleinheit 52a in Abhängigkeit von einer Benutzereinstellung, einem Bediener, eines gemittelten Maximalwerts der erfassten Bewegungskenngröße, einer anderen erfassten Bewegungskenngröße der Kettensäge 10a und/oder einer Aktivierungsdauer der Antriebseinheit 18a der Kettensäge 10a bestimmt. Beispielsweise wird der Grenzwert zur Ermittlung der Gefahrensituation mittels der Steuer- und/oder Regeleinheit 52a proportional zu einem Durchschnittswert und/oder zu einem Maximalwert des gemittelten Verlaufs bestimmt. In zumindest einem Verfahrensschritt des Verfahrens 100a, insbesondere dem Verfahrensschritt 105a, wird mittels der Steuer- und/oder Regeleinheit 52a der Grenzwert zu einer Ermittlung der Gefahrensituation auf einen Wert gesetzt, der 40% eines Mittelwerts des gemittelten Verlaufs der erfassten Bewegungskenngröße entspricht.

In zumindest einem weiteren Verfahrensschritt 106a des Verfahrens 100a wird mittels der Sensoreinheit 36a und der Steuer- und/oder Regeleinheit 52a über die erfasste Bewegungskenngröße der Kettensäge 10a, insbesondere über eine Vielzahl von erfassten Bewegungskenngrößen der Kettensäge 10a, eine Bewegung der Gehäuseeinheit 12a und/oder des Sägeschwerts 14a, insbesondere während eines Bearbeitens eines Werkstücks, berechnet und/oder ermittelt. Insbesondere in dem Verfahrensschritt 106a wird mittels der Steuer- und/oder Regeleinheit 52a anhand von der Bewegung der Gehäuseeinheit 12a und/oder des Sägeschwerts 14a, insbesondere während des Bearbeitens eines Werkstücks, ein Bearbeitungsvorgang der Kettensäge 10a bestimmt. Vorzugsweise erfolgt in dem Verfahrensschritt 106a mittels der Steuer- und/oder Regeleinheit 52a in Abhängigkeit von der Bewegung der Gehäuseeinheit 12a und/oder des Sägeschwerts 14a, insbesondere während eines Bearbeitens eines Werkstücks, und/oder von dem bestimmten Bearbeitungsvorgang der Kettensäge 10a eine Identifikation von möglichen Gefahrensituationen, die verschieden ist von einem Zurückschlagen eines Sägeschwerts 14a der Kettensäge 10a. Vorzugsweise wird in zumindest einem Verfahrensschritt des Verfahrens 100a, insbesondere in dem Verfahrensschritt 106a, mittels der Steuer- und/oder Regeleinheit 52a eine Richtung einer Vorschubbewegung der Kettensäge 10a in Abhängigkeit von der erfassten Bewegungskenngröße, insbesondere einer Geschwindigkeit des Sägeschwerts 14a, und/oder von einem Betätigen des Betätigungselements 24a der Kettensäge 10a bestimmt.

In zumindest einem weiteren Verfahrensschritt 108a des Verfahrens 100a wird mittels der Steuer- und/oder Regeleinheit 52a der Bremsvorrichtung 20a zumindest ein Grenzwert zu einer Ermittlung der Gefahrensituation, die verschieden ist von einem Zurückschlagen des Sägeschwerts 14a der Kettensäge 10a, in Abhängigkeit von der Bewegung der Gehäuseeinheit 12a und/oder des Sägeschwerts 14a der Kettensäge 10a bestimmt. Besonders bevorzugt wird der Grenzwert zu einer Ermittlung der Gefahrensituation, die verschieden ist von einem Zurückschlagen des Sägeschwerts 14a der Kettensäge 10a, mittels der Steuer- und/oder Regeleinheit 52a in Abhängigkeit von den identifizierten möglichen Gefahrensituationen bestimmt. In zumindest einem weiteren Verfahrensschritt des Verfahrens 100a, insbesondere dem Verfahrensschritt 108a, wird mittels der Steuer- und/oder Regeleinheit 52a in Abhängigkeit von der erfassten Bewegungskenngröße und/oder der Bewegung der Gehäuseeinheit 12a und/oder des Sägeschwerts 14a, insbesondere während eines Bearbeitens eines Werkstücks, zumindest ein, insbesondere dynamisches, virtuelles Modell der Kettensäge 10a erstellt, wobei insbesondere das virtuelle Modell der Kettensäge 10a zu einer Identifikation der möglichen Gefahrensituationen und/oder der Gefahrensituation, die verschieden ist von einem Zurückschlagen des Sägeschwerts 14a der Kettensäge 10a, herangezogen wird.

In zumindest einem Verfahrensschritt 110a des Verfahrens 100a wird mittels der Steuer- und/oder Regeleinheit 52a der Bremsvorrichtung 20a zumindest ein Grenzwert zu einer Ermittlung der Gefahrensituation, die verschieden ist von einem Zurückschlagen des Sägeschwerts 14a der Kettensäge 10a, über ein maschinelles Lernverfahren ermittelt. Bei dem maschinellen Lernverfahren wird mittels der Steuer- und/oder Regeleinheit 52a und/oder mittels zumindest der externen Einheit 47a, insbesondere einem Server, einem Rechenzentrum und/oder einem Netzwerk aus mehreren Kettensägen 10a, eine Vielzahl von hinterlegten Daten, insbesondere Bewegungskenngrößen, Betriebskenngrößen und/oder ermittelten Gefahrensituationen, zu einer Anpassung des Grenzwerts herangezogen. Insbesondere werden bei dem maschinellen Lernverfahren mittels der Steuer- und/oder Regeleinheit 52a und/oder mittels zumindest der externen Einheit 47a die erfasste Bewegungskenngröße, insbesondere der gemittelte Verlauf der erfassten Bewegungskenngröße, zu mindestens 100 Schnitten der Kettensäge 10a zu einer Anpassung des Grenzwerts herangezogen. Das maschinelle Lernverfahren erfolgt über zumindest einen Algorithmus zur Identifikation der zumindest einen Gefahrensituation, wobei der Algorithmus dazu eingerichtet ist, mittels zumindest einer erfassten Bewegungskenngröße, insbesondere einem gemittelten Verlauf der erfassten Bewegungskenngröße, die Gefahrensituation zu identifizieren und den Grenzwert anzupassen. Vorzugsweise wird dem maschinellen Lernverfahren mittels der Steuer- und/oder Regeleinheit 52a zumindest ein Grenzwert vorgegeben, wobei insbesondere der Algorithmus dazu vorgesehen ist, den Grenzwert, vorzugsweise kontinuierlich, anzupassen. In zumindest einem Verfahrensschritt des Verfahrens 100a, insbesondere dem Verfahrensschritt 110a, werden mittels der Steuer- und/oder Regeleinheit 52a über zumindest ein Clustering-Verfahren Daten, insbesondere die zumindest eine erfasste Bewegungskenngröße, den gemittelten Verlauf der zumindest einen Bewegungskenngröße und/oder die zumindest eine erfasste Betriebskenngröße, zur Identifikation der Gefahrensituation in mehrere Gruppen eingeteilt, wobei jeder Gruppe zumindest ein charakteristisches Muster der Bewegungskenngröße und/oder dem Verlauf der Bewegungskenngröße zugeordnet wird. Insbesondere werden die Gruppen mittels der Steuer- und/oder Regeleinheit 52a nach Bediener, nach zu bearbeitendem Werkstück, nach Art der verwendeten Sägekette 16a und nach einer Verwendungsdauer oder einem Abnutzungsgrad der Sägekette 16a eingeteilt, wobei insbesondere für jede Gruppe mittels der Steuer- und/oder Regeleinheit 52a über den Algorithmus ein unterschiedlicher Grenzwert zu einer Ermittlung der Gefahrensituation bestimmt wird. Insbesondere erfolgt in zumindest einem Verfahrensschritt des Verfahrens 100a, insbesondere dem Verfahrensschritt 110a, die Zuteilung der Gruppen mittels der Steuer- und/oder Regeleinheit 52a, insbesondere über die Sensoreinheit 36a, in Abhängigkeit von der erfassten Bewegungskenngröße, dem gemittelten Verlauf der erfassten Bewegungskenngröße, einer Bedienereingabe und/oder der erfassten Betriebskenngröße. In zumindest einem Verfahrensschritt des Verfahrens 100a, insbesondere dem Verfahrensschritt 110a, werden mittels zumindest einer Kommunikationseinheit 45a der der Bremsvorrichtung 20a elektronische Daten, insbesondere die erfasste Bewegungskenngröße, die erfasste Betriebskenngröße, der Algorithmus o. dgl., an die externe Einheit 47a übertragen und, insbesondere zur Verwendung im maschinellen Lernverfahren vorgesehene, elektronische Daten, insbesondere Werte der Bewegungskenngröße, des Verlaufs der Bewegungskenngröße, der Betriebskenngröße und/oder des Algorithmus, von der externen Einheit 47a empfangen. Insbesondere werden die über die Kommunikationseinheit 45a empfangenen, insbesondere zur Verwendung im maschinellen Lernverfahren vorgesehenen, elektronischen Daten mittels der Steuer- und/oder Regeleinheit 52a zu einer Ermittlung des Grenzwerts und/oder zu einer Anpassung des Algorithmus herangezogen. In dem maschinellen Lernverfahren wird die Betriebskenngröße zu einer Erfassung einer Art der Sägekette 16a oder einer Abnutzung der Sägekette 16a, zu einer Bestimmung eines Bedieners der Kettensäge 10a und/oder zu einer Ermittlung einer Art des Werkstücks herangezogen. Mittels der Steuer- und/oder Regeleinheit 52a wird in dem maschinellen Lernverfahren die Art des Werkstücks über eine Drehzahl der Antriebseinheit 18a bei einem Schnitt durch das Werkstück, über eine Geschwindigkeit des Sägeschwerts 14a in Vorschubrichtung und über eine Auswertung von mittels der Sensoreinheit 36a erfassten Daten des Werkstücks ermittelt.

Das maschinelle Lernverfahren erfolgt in zumindest einem weiteren Verfahrensschritt 111a des Verfahrens 100a während eines in Abhängigkeit von der erfassten Bewegungskenngröße und/oder einer Benutzereingabe, insbesondere mittels des Bedienelements 25a der Bedieneinheit 44a der Bremsvorrichtung 20a, aktivierbaren und/oder deaktivierbaren Lernmodus, wobei insbesondere in dem Lernmodus der Bediener bei oder nach einem Betätigen der Bremseinheit 42a über das Ausgabeelement 48a und/oder das Bedienelement 25a eine Funktiona-lität der Bremsvorrichtung 20a abgefragt wird, wobei insbesondere mittels der Steuer- und/oder Regeleinheit 52a eine Richtigkeit der ermittelten Gefahrensituation, insbesondere des Betätigens der Bremseinheit 42a, überprüft wird. Insbesondere wird die Richtigkeit der ermittelten Gefahrensituation, insbesondere des Betätigens der Bremseinheit 44a, mittels der Steuer- und/oder Regeleinheit 52a bei einer Erfassung eines vorgegebenen Betätigungsmusters des Ausgabeelements 48a und/oder des Bedienelements 25a durch den Bediener erkannt. In dem Lernmodus wird mittels der Steuer- und/oder Regeleinheit 52a in Abhängigkeit von einer Betätigungsdauer des Ausgabeelements 48a und/oder des Bedienelements 25a die Richtigkeit der ermittelten Gefahrensituation, insbesondere des Betätigens der Bremseinheit 42a, beurteilt, wobei beispielsweise bei einem mittels der Steuer- und/oder Regeleinheit 52a und/oder der Sensoreinheit 36a erfassten Zeitintervall einer Betätigungspause des Ausgabeelements und/oder des Bedienelements von weniger als 1 s nach einem Betätigen der Bremseinheit 42a eine fehlerhaft identifizierte Gefahrensituation und/oder ein ungewolltes Betätigen der Bremseinheit 42a erkannt wird. Insbesondere wird in zumindest einem Verfahrensschritt des Verfahrens 100a, insbesondere dem Verfahrensschritt 111a, in dem Lernmodus mittels der Steuer- und/oder Regeleinheit 52a in Abhängigkeit von der abgefragten Funktionalität, der Algorithmus und/oder der Grenzwert zu einer Ermittlung der Gefahrensituation angepasst.

In zumindest einem weiteren Verfahrensschritt 112a des Verfahrens 100a wird mittels zumindest der Steuer- und/oder Regeleinheit 52a der Bremsvorrichtung 20a zumindest ein Grenzwert zu einer Ermittlung der Gefahrensituation, die verschieden ist von einem Zurückschlagen des Sägeschwerts 14a der Kettensäge 10a, in Abhängigkeit von der, insbesondere erfassten, Betriebskenngröße der Kettensäge 10a, insbesondere einer Drehzahl der Antriebseinheit 18a oder der Sägekette 16a der Kettensäge 10a, bestimmt. Insbesondere erfolgt mittels der Steuer- und/oder Regeleinheit 52a eine Ermittlung eines Kontakts der Sägekette 16a mit dem Werkstück in Abhängigkeit von der Betriebskenngröße. Insbesondere in zumindest einem Verfahrensschritt des Verfahrens 100a, insbesondere dem Verfahrensschritt 108a, erfolgt mittels der Steuer- und/oder Regeleinheit 52a eine Ermittlung der Vorschubrichtung der Kettensäge 10a in Abhängigkeit von der Betriebskenngröße und zumindest einer erfassten Bewegungskenngröße. In zumindest einem Verfahrensschritt des Verfahrens 100a, insbesondere dem Verfahrensschritt 112a, erfolgt eine Identifikation der Gefahrensituation, die verschieden ist von einem Zurückschlagen des Sägeschwerts 14a der Kettensäge 10a, mittels der Steuer- und/oder Regeleinheit 52a in Abhängigkeit von der Betriebskenngröße, wobei insbesondere der Grenzwert bei einer Überschreitung eines Betriebskenngrößengrenzwerts angepasst wird.

In zumindest einem weiteren Verfahrensschritt 114a des Verfahrens 100a wird mittels der Steuer- und/oder Regeleinheit 52a der Bremsvorrichtung 20a zumindest ein Grenzwert zu einer Ermittlung der Gefahrensituation, die verschieden ist von einem Zurückschlagen des Sägeschwerts 14a der Kettensäge 10a, in Abhängigkeit von einer durch den Bediener, insbesondere mittels der Bedieneinheit 44a der Bremsvorrichtung 20a, vorgenommenen Einstellung bestimmt. Bevorzugt erfolgt in zumindest einem Verfahrensschritt des Verfahrens 100a, insbesondere dem Verfahrensschritt 114a, eine Auswahl der Einstellung durch den Bediener mittels des Bedienelements 25a, des Ausgabeelements 48a und/oder eines weiteren Bedienelements der Bedieneinheit 44a. Insbesondere wird mittels der Steuer- und/oder Regeleinheit 52a jeder möglichen Einstellung zumindest ein Grenzwert zu einer Ermittlung der Gefahrensituation zugeordnet.

In zumindest einem weiteren Verfahrensschritt 116a des Verfahrens 100a wird mittels der Aktuierungseinheit 46a der Bremsvorrichtung 20a zumindest in Abhängigkeit von der erfassten Bewegungskenngröße die Bremseinheit 42a der Bremsvorrichtung 20a zu einem Abbremsen und/oder Entkoppeln der Sägekette 16a der Kettensäge 10a betätigt und zumindest ein, insbesondere bewegbares, Ausgabeelement 48a der Bedieneinheit 44a der Bremsvorrichtung 20a zu einer Ausgabe eines betätigten Zustands der Bremseinheit 42a an den Bediener aktiviert. In zumindest einem weiteren Verfahrensschritt 118a des Verfahrens 100a wird mittels der Steuer- und/oder Regeleinheit 52a der Bremsvorrichtung 20a in Abhängigkeit von der erfassten Bewegungskenngröße, insbesondere des bestimmten Grenzwerts, die Gefahrensituation, die verschieden ist von einem Zurückschlagen des Sägeschwerts 14a der Kettensäge 10a, ermittelt. In zumindest einem weiteren Verfahrensschritt 120a des Verfahrens 100a wird mittels der Aktuierungseinheit 46a in Abhängigkeit von zumindest einer zumindest über die erfasste Bewegungskenngröße ermittelten Gefahrensituation, die verschieden ist von einem Zurückschlagen des Sägeschwerts 14a der Kettensäge 10a, die Bremseinheit 42a betätigt und das Ausgabeelement 48a aktiviert. Vorzugsweise wird das Ausgabeelement 48a bei einem Aktivieren des Ausgabeelements 48a durch die Aktuierungseinheit 46a mittels eines Auslöseelements 58a, 64a der Aktuierungseinheit 46a, um zumindest eine Schwenkachse des Ausgabeelements 48a in eine Sperrposition bewegt. In zumindest einem Verfahrensschritt des Verfahrens 100a, insbesondere dem Verfahrensschritt 120a, werden bei einem Betätigen der Bremseinheit 42a die Steuer- und/oder Regeleinheit 52a und die Sensoreinheit 36a in zumindest einen passiven Zustand überführt, wobei insbesondere eine Erfassung der Bewegungskenngröße und/oder eine Ermittlung der Gefahrensituation ausgesetzt wird. In zumindest einem Verfahrensschritt des Verfahrens 100a, insbesondere dem Verfahrensschritt 120a, wird mittels der Aktuierungseinheit 46a das Ausgabeelement 48a mechanisch entkoppelt von einem Betätigen der Bremseinheit 42a aktiviert.

Vorzugsweise erfolgt in zumindest einem weiteren Verfahrensschritt 122a des Verfahrens 100a nach einem Aktivieren des Ausgabeelements 48a und einem Betätigen der Bremseinheit 42a, mittels eines Deaktivierens, insbesondere eines Zurückbewegens, des Ausgabeelements 48a ein Lösen der Bremseinheit 42a. Insbesondere werden in zumindest einem weiteren Verfahrensschritt des Verfahrens 100a, insbesondere dem Verfahrensschritt 122a, beim Lösen der Bremseinheit 42a die Steuer- und/oder Regeleinheit 52a und die Sensoreinheit 36a in einen aktiven Zustand überführt, wobei insbesondere die Erfassung der Bewegungskenngröße und/oder die Ermittlung der Gefahrensituation kontinuierlich erfolgt. Insbesondere erfolgt ein Deaktivieren und/oder ein Zurückbewegen des Ausgabeelements 48a über eine Bewegung des Ausgabeelements 48a aus der Sperrposition in eine Grundposition des Ausgabeelements 48a mittels des Bedieners.

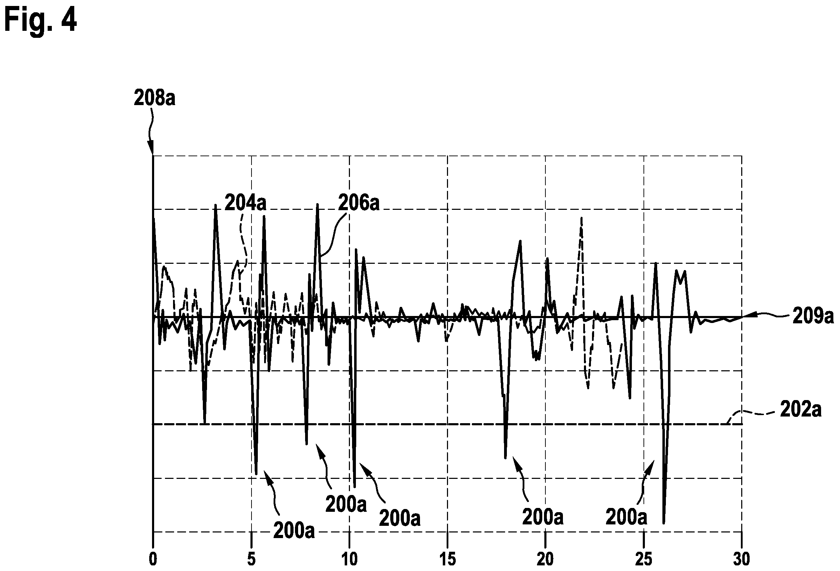

In Figur 4 sind Verläufe einer mittels der Sensoreinheit 36a der Bremsvorrichtung 20a erfassten, als Winkelgeschwindigkeit ausgebildeten Bewegungskenngröße zu zwei unterschiedlichen Sägevorgängen der Kettensäge 10a gezeigt. Zur Ermittlung einer als Durchschwingen der Kettensäge 10a ausgebildeten Gefahrensituation 200a wird mittels der Steuer- und/oder Regeleinheit 52a der Bremsvorrichtung 20a ein Grenzwert 202a von 200°/s in eine zumindest im Wesentlichen parallel zu einer Vorschubrichtung der Kettensäge 10a ausgerichtete Richtung bestimmt. Ein erster Verlauf 204a zeigt einen Sägevorgang in Abwesenheit von Gefahrensituationen 200a. Ein zweiter Verlauf 206a zeigt einen Sägevorgang mit einer Vielzahl von als Durchschwingen der Kettensäge 10a ausgebildeten Gefahrensituationen 200a, die jeweils über eine deutliche Auslenkung eines Werts der Bewegungskenngröße erkennbar sind. Eine in der Figur 4 gezeigte Ordinate 208a stellt die Winkelgeschwindigkeit in °/s dar. Eine in der Figur 4 gezeigte Abszisse 209a stellt eine Zeit dar. Insbesondere zeigt der zweite Verlauf 206a nach den Gefahrensituationen 200a jeweils eine positive Auslenkung der Winkelgeschwindigkeit, wobei ein Bediener die Kettensäge 10a, insbesondere das Sägeschwert 14a der Kettensäge 10a, nach einem Durchschwingen der Kettensäge 10a wieder an ein Werkstück anlegt. Es ist beispielsweise auch denkbar, dass der Grenzwert 202a zur Ermittlung der Gefahrensituation 200a in Abhängigkeit von einem gemittelten Wert der Bewegungskenngröße dynamisch bestimmt wird.

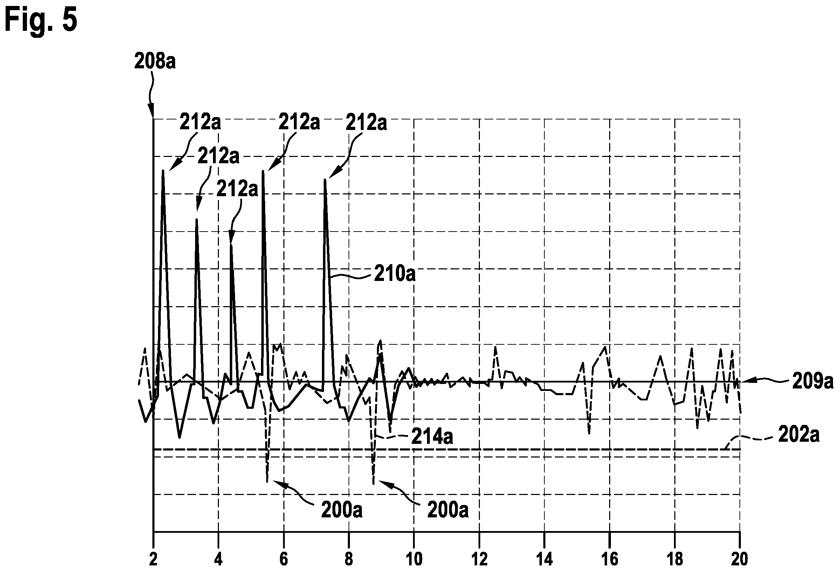

In Figur 5 sind weitere Verläufe einer mittels der Sensoreinheit 36a der Bremsvorrichtung 20a erfassten, als Winkelgeschwindigkeit ausgebildeten Bewegungskenngröße zu zwei weiteren unterschiedlichen Sägevorgängen der Kettensäge 10a gezeigt. Zur Ermittlung einer als Durchschwingen der Kettensäge 10a ausgebildeten Gefahrensituation 200a wird mittels der Steuer- und/oder Regeleinheit 52a der Bremsvorrichtung 20a ein Grenzwert 202a von 200°/s in eine zumindest im Wesentlichen parallel zu einer Vorschubrichtung der Kettensäge 10a ausgerichtete Richtung bestimmt. Ein erster weiterer Verlauf 210a zeigt einen Sägevorgang mit als Zurückschlagen des Sägeschwerts 14a ausgebildeten Gefahrensituationen 212a. Ein zweiter weiterer Verlauf 214a zeigt einen Sägevorgang mit zwei von als Durchschwingen der Kettensäge 10a ausgebildeten Gefahrensituationen 200a. Die Gefahrensituationen 200a, 212a sind jeweils über eine deutliche Auslenkung eines Werts der Bewegungskenngröße erkennbar. Eine in der Figur 5 gezeigte Ordinate 208a stellt die Winkelgeschwindigkeit in °/s dar. Eine in der Figur 5 gezeigte Abszisse 209a stellt eine Zeit dar. Die einer als Zurückschlagen des Sägeschwerts 14a ausgebildeten Gefahrensituation 212a zugeordneten Spitzen der Bewegungskenngröße weisen jeweils einen größeren Betrag eines Maximalwerts und eine andere Richtung auf, wie den als Durchschwingen der Kettensäge 10a ausgebildeten Gefahrensituationen 200a zugeordnete Spitzen der Bewegungskenngröße.

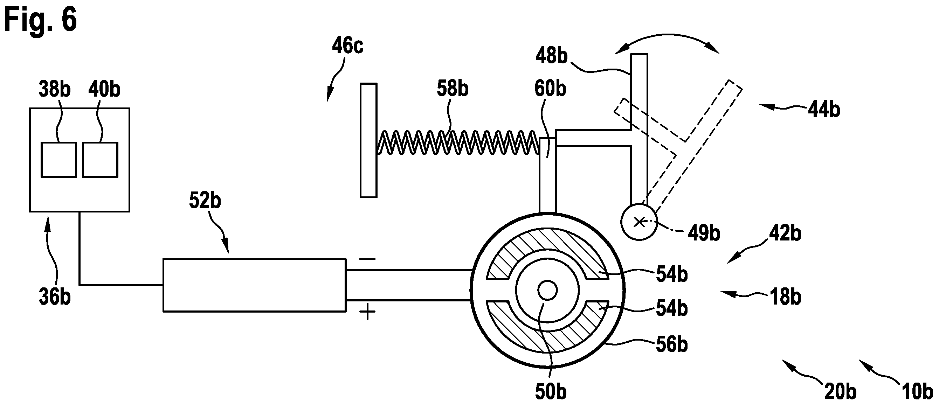

In den Figuren 6 bis 8 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 8 ist der Buchstabe a durch die Buchstaben b bis d ersetzt.

In der Figur 6 ist eine erste alternative Ausgestaltung einer Bremsvorrichtung 20b einer Kettensäge 10b in einem Bereich einer Bremseinheit 42b der Bremsvorrichtung 20b gezeigt. Die Bremsvorrichtung 20b weist eine Sensoreinheit 36b, die ein Sensorelement 38b und ein anderes Sensorelement 40b zu einer Erfassung von zumindest einer Bewegungskenngröße der Kettensäge 10b umfasst, die Bremseinheit 42b zu einem Abbremsen und/oder Entkoppeln einer Sägekette 16b der Kettensäge 10b, eine Bedieneinheit 44b zu einer Interaktion mit einem Bediener und eine Aktuierungseinheit 46b auf, die dazu vorgesehen ist, zumindest in Abhängigkeit von der erfassten Bewegungskenngröße die Bremseinheit 42b zu betätigen und ein, insbesondere bewegbares, Ausgabeelement 48b der Bedieneinheit 44b, welches dem Bediener einen betätigten Zustand der Bremseinheit 42b ausgibt, zu aktivieren. Die Aktuierungseinheit 46b ist dazu vorgesehen, in Abhängigkeit von zumindest einer zumindest über die erfasste Bewegungskenngröße ermittelten Gefahrensituation, die verschieden ist von einem Zurückschlagen eines Sägeschwerts 14b der Kettensäge 10b, die Bremseinheit 42b zu betätigen und das Ausgabeelement 48b zu aktivieren. Die in der Figur 6 dargestellte Bremsvorrichtung 20b weist eine zumindest im Wesentlichen analoge Ausgestaltung zu der in der Beschreibung der Figuren 1 bis 5 beschriebenen Bremsvorrichtung 20a auf, so dass bezüglich einer Ausgestaltung der in der Figur 6 dargestellten Bremsvorrichtung 20b zumindest im Wesentlichen auf die Beschreibung der Figuren 1 bis 5 verwiesen werden kann. Im Unterschied zu der in der Beschreibung der Figuren 1 bis 5 beschriebenen Bremsvorrichtung 20a weist die Aktuierungseinheit 46b der in der Figur 6 dargestellten Bremsvorrichtung 20b vorzugsweise ein Aktuierungselement 56b auf, das aus einer Formgedächtnislegierung gebildet ist und dazu vorgesehen ist, bei einer Anregung durch eine Steuer- und/oder Regeleinheit 52b der Bremsvorrichtung 20b, insbesondere bei einer Identifikation der Gefahrensituation, direkt zwei Bremselemente 54b der Bremseinheit 42b zu betätigen und ein Koppelelement 60b der Aktuierungseinheit 46b zu einem Freigeben eines Auslöseelements 58b der Aktuierungseinheit 46b zu bewegen, wobei das Auslöseelement 58b das Ausgabeelement 48b aktiviert. Die Bremseinheit 42b ist als Kraftschlussbremse ausgebildet. Die Bremselemente 54b umschließen ein Antriebselement 50b einer Antriebseinheit 18b der Kettensäge 10b zumindest größtenteils. Insbesondere sind die zwei Bremselemente 54b in zumindest einer Schnittebene halbringförmig ausgebildet. Das Aktuierungselement 56b umschließt die zwei Bremselemente 54b und ist dazu vorgesehen, sich bei einer Anregung durch die Steuer- und/oder Regeleinheit 52b zusammenzuziehen, wobei die zwei Bremselemente 54b auf das Antriebselement 50b bewegt werden. Insbesondere sind die Bremselemente 54b dazu vorgesehen, das Antriebselement 50b durch einen Kraftschluss abzubremsen. Bei einem Zusammenziehen des angeregten Aktuierungselements 56b wird das Koppelelement 60b in eine das Auslöseelement 58b freigebende Position bewegt.

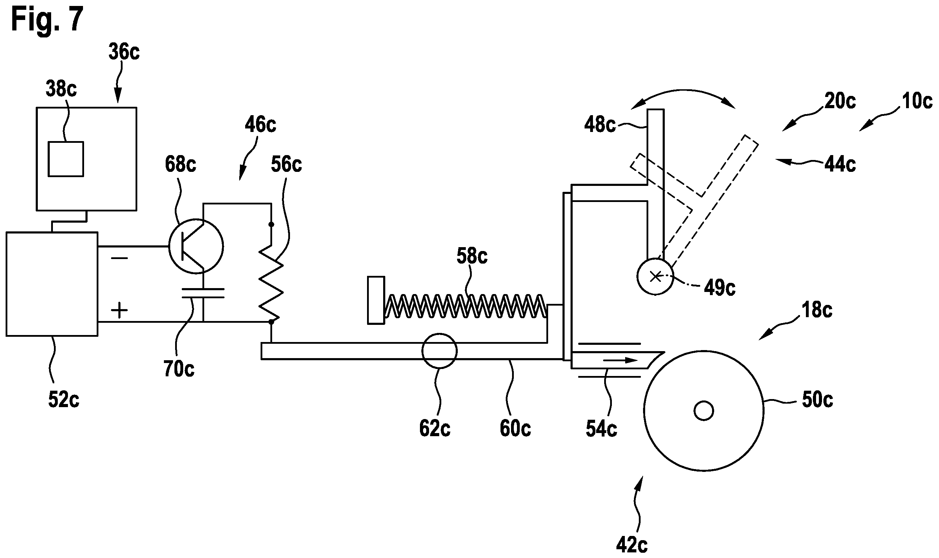

In der Figur 7 ist eine zweite alternative Ausgestaltung einer Bremsvorrichtung 20c einer Kettensäge 10c in einem Bereich einer Bremseinheit 42c und einer Aktuierungseinheit 46c der Bremsvorrichtung 20c gezeigt. Die Bremsvorrichtung 20c weist eine Sensoreinheit 36c auf, die ein Sensorelement 38c zu einer Erfassung von zumindest einer Bewegungskenngröße der Kettensäge 10c umfasst. Die Bremsvorrichtung 20c umfasst die Bremseinheit 42c zu einem Abbremsen und/oder Entkoppeln einer Sägekette 16c der Kettensäge 10c, eine Bedieneinheit 44c zu einer Interaktion mit einem Bediener und die Aktuierungseinheit 46c, die dazu vorgesehen ist, zumindest in Abhängigkeit von der erfassten Bewegungskenngröße die Bremseinheit 42c zu betätigen und ein, insbesondere bewegbares, Ausgabeelement 48c der Bedieneinheit 44c, welches dem Bediener einen betätigten Zustand der Bremseinheit 42c ausgibt, zu aktivieren. Die Aktuierungseinheit 46c ist dazu vorgesehen, in Abhängigkeit von zumindest einer zumindest über die erfasste Bewegungskenngröße und/oder die erfasste Betriebskenngröße ermittelten Gefahrensituation, die verschieden ist von einem Zurückschlagen eines Sägeschwerts 14c der Kettensäge 10c, die Bremseinheit 42c zu betätigen und das Ausgabeelement 48c zu aktivieren. Die in der Figur 7 dargestellte Bremsvorrichtung 20c weist eine zumindest im Wesentlichen analoge Ausgestaltung zu der in der Beschreibung der Figuren 1 bis 5 beschriebenen Bremsvorrichtung 20a auf, so dass bezüglich einer Ausgestaltung der in der Figur 7 dargestellten Bremsvorrichtung 20c zumindest im Wesentlichen auf die Beschreibung der Figuren 1 bis 5 verwiesen werden kann. Im Unterschied zu der in der Beschreibung der Figuren 1 bis 5 beschriebenen Bremsvorrichtung 20a weist die Aktuierungseinheit 46c der in der Figur 7 dargestellten Bremsvorrichtung 20c lediglich ein Auslöseelement 58c auf, welches dazu vorgesehen ist, bei einer Ansteuerung der Aktuierungseinheit 46c mittels der Steuer- und/oder Regeleinheit 52c über ein Koppelelement 60c der Aktuierungseinheit 46c das Ausgabeelement 48c zu aktivieren und die Bremseinheit 42c zu betätigen. Die Aktuierungseinheit 46c umfasst ein aus einer Formgedächtnislegierung gebildetes Aktuierungselement 56c. Das Aktuierungselement 56c ist, insbesondere in dem in Figur 7 gezeigten Ersatzschaltbild, in einer Leiterschleife mit einem Transistor 68c und einer, insbesondere als Kondensator ausgebildeten, Kapazität 70c angeordnet. Das Aktuierungselement 56c ist an einem Ende über den Transistor 68c mit der Steuer- und/oder Regeleinheit 52c, insbesondere einem elektrischen Pol der Steuer- und/oder Regeleinheit 52c, verbunden. Es sind jedoch auch andere Ausgestaltungen der Aktuierungseinheit 46c und/oder der Steuer- und/oder Regeleinheit 52c denkbar, insbesondere zu einer alternativen Ansteuerung des Aktuierungselements 56c. Das Auslöseelement 58c ist als eine Feder ausgebildet. Das Koppelelement 60c ist dazu vorgesehen, das Auslöseelement 58c in einem unaktivierten Zustand der Aktuierungseinheit 46c in einem vorgespannten Zustand zu halten. Das Koppelelement 60c ist als Hebel ausgebildet. Es sind aber auch andere Ausgestaltungen des Koppelelements 60c denkbar, beispielsweise als Schieber, als Elektromagnet o. dgl. Das Koppelelement 60c ist dazu vorgesehen, bei einem Ansteuern der Aktuierungseinheit 46c mittels der Steuer-und/oder Regeleinheit 52c, insbesondere durch eine Aktuierung durch das Aktuierungselement 56c, das Auslöseelement 58c freizugeben, wobei insbesondere die Bremseinheit 42c betätigt und das Ausgabeelement 48c aktiviert wird. Das Auslöseelement 58c ist dazu vorgesehen, bei einem Freigeben durch das Koppelelement 60c, das Bremselement 54c mit einer Auslösekraft zu beaufschlagen und mit dem Antriebselement 50c zu einem Bremsen und/oder Entkoppeln der Sägekette 16c in Kontakt zu bringen. Es sind jedoch auch andere Ausgestaltungen des Auslöseelements 58c denkbar, insbesondere unabhängig von dem Koppelelement 60c, beispielsweise als Elektromagnet, als Pneumatikelement, als Hydraulikelement, als Piezoelement o. dgl. Insbesondere ist das Aktuierungselement 56c dazu vorgesehen, bei einer Anregung das Koppelelement 60c um einen Aufhängepunkt 62c zu bewegen und das Auslöseelement 58c freizugeben. Das Aktuierungselement 56c ist fest mit dem Koppelelement 60c verbunden, wobei das Koppelelement 60c bei einem Formzustandsübergang des Aktuierungselements 56c um den Aufhängepunkt 62c bewegt wird. Das Auslöseelement 58c aktiviert über die Auslösekraft das Ausgabeelement 48c, wobei das Ausgabeelement 48c in die Sperrposition bewegt wird. Das Ausgabeelement 48c ist dazu vorgesehen, bei einer Bewegung von der Sperrposition in die Grundposition durch einen Bediener, das Auslöseelement 58c zu spannen und das Bremselement 54c von dem Antriebselement 50c zu trennen.

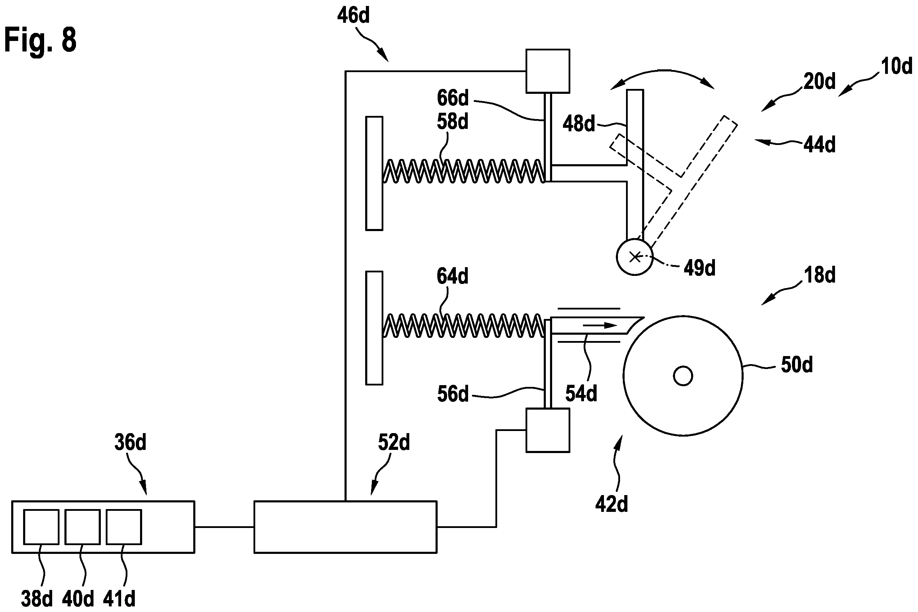

In der Figur 8 ist eine dritte alternative Ausgestaltung einer Bremsvorrichtung 20d einer Kettensäge 10d in einem Bereich einer Bremseinheit 42d und einer Aktuierungseinheit 46d der Bremsvorrichtung 20d gezeigt. Die in der Figur 8 dargestellte Bremsvorrichtung 20d weist eine zumindest im Wesentlichen analoge Ausgestaltung zu der in der Beschreibung der Figuren 1 bis 5 beschriebenen Bremsvorrichtung 20a auf, so dass bezüglich einer Ausgestaltung der in der Figur 8 dargestellten Bremsvorrichtung 20d zumindest im Wesentlichen auf die Beschreibung der Figuren 1 bis 5 verwiesen werden kann. Im Unterschied zu der in der Beschreibung der Figuren 1 bis 5 beschriebenen Bremsvorrichtung 20a weist die Aktuierungseinheit 46d der in der Figur 8 dargestellten Bremsvorrichtung 20d vorzugsweise ein Aktuierungselement 56d und ein weiteres Aktuierungselement 66d auf, wobei das Aktuierungselement 56d dazu vorgesehen ist, die Bremseinheit 42d zu betätigen und das weitere Aktuierungselement 66d dazu vorgesehen ist, ein Ausgabeelement 48d einer Bedieneinheit 44d der Bremsvorrichtung 20d zu aktivieren. Das Aktuierungselement 56d und das weitere Aktuierungselement 66d sind getrennt voneinander ausgebildet. Das Aktuierungselement 56d ist dazu vorgesehen, ein erstes Auslöseelement 58d der Aktuierungseinheit 46d zu einer Betätigung der Bremseinheit 42d, insbesondere eines Bremselements 54d der Bremseinheit 42d, direkt freizugeben. Das weitere Aktuierungselement 66d ist dazu vorgesehen, ein zweites Auslöseelement 64d der Aktuierungseinheit 46d zu einer Aktivierung des Ausgabeelements 48d direkt freizugeben.

## Patentansprüche

1. Bremsvorrichtung für eine Kettensäge, mit zumindest einer Sensoreinheit (36a; 36b; 36c; 36d), die zumindest ein Sensorelement (38a; 38b; 38c; 38d), insbesondere ein Gyroskop, zu einer Erfassung von zumindest einer Bewegungskenngröße, insbesondere einer Winkelgeschwindigkeit und/oder einer Beschleunigung, der Kettensäge (10a; 10b; 10c; 10d) umfasst, mit zumindest einer Bremseinheit (42a; 42b; 42c; 42d) zu einem Abbremsen und/oder Entkoppeln einer Sägekette (16a; 16b; 16c; 16d) der Kettensäge (10a; 10b; 10c; 10d), mit zumindest einer Bedieneinheit (44a; 44b; 44c; 44d) zu einer Interaktion mit einem Bediener und mit zumindest einer Aktuierungseinheit (46a; 46b; 46c; 46d), die dazu vorgesehen ist, zumindest in Abhängigkeit von der erfassten Bewegungskenngröße die Bremseinheit (42a; 42b; 42c; 42d) zu betätigen und ein, insbesondere bewegbares, Ausgabeelement (48a; 48b; 48c; 48d), insbesondere Sicherheitsbedienelement, der Bedieneinheit (44a; 44b; 44c; 44d), welches dem Bediener einen betätigten Zustand der Bremseinheit (42a; 42b; 42c; 42d) ausgibt, zu aktivieren, wobei die Aktuierungseinheit (46a; 46b; 46c; 46d) dazu vorgesehen ist, in Abhängigkeit von zumindest einer zumindest über die erfasste Bewegungskenngröße ermittelten Gefahrensituation, die verschieden ist von einem Zurückschlagen eines Sägeschwerts (14a; 14b; 14c; 14d) der Kettensäge (10a; 10b; 10c; 10d), die Bremseinheit (42a; 42b; 42c; 42d) zu betätigen und das Ausgabeelement (48a; 48b; 48c; 48d) zu aktivieren, **dadurch gekennzeichnet, dass** zumindest eine Steuer- und/oder Regeleinheit (52a; 52b; 52c; 52d), die dazu eingerichtet ist, bei einem Überschreiten eines Grenzwerts eines mittels der Sensoreinheit (36a; 36b; 36c; 36d) erfassten Signals der als Winkelgeschwindigkeit ausgebildeten erfassten Bewegungskenngröße von mindestens 100°/s die Gefahrensituation, die verschieden ist von einem Zurückschlagen eines Sägeschwerts (14a; 14b; 14c; 14d) der Kettensäge (10a; 10b; 10c; 10d), zu identifizieren und die Aktuierungseinheit (46a; 46b; 46c; 46d) anzusteuern.

2. Bremsvorrichtung nach Anspruch 1, **dadurch gekennzeichnet, dass** die Aktuierungseinheit (46a; 46b; 46c; 46d) zumindest ein Aktuierungselement (56a; 56b; 56c; 56d, 66d) zu einem Betätigen der Bremseinheit (42a; 42b; 42c; 42d) und/oder einem Aktivieren des Ausgabeelements (48a; 48b; 48c; 48d) aufweist, wobei das Aktuierungselement (56a; 56b; 56c; 56d, 66d) zumindest teilweise aus einem Formgedächtnismaterial gebildet ist.

3. Bremsvorrichtung nach einem der vorhergehenden Ansprüche, **dadurch gekennzeichnet, dass** die Aktuierungseinheit (46a; 46d) dazu vorgesehen ist, das Ausgabeelement (48a; 48d) zumindest mechanisch entkoppelt von und/oder nach einem Betätigen der Bremseinheit (42a; 42d) zu aktivieren.

4. Bremsvorrichtung nach einem der vorhergehenden Ansprüche, **dadurch gekennzeichnet, dass** die Aktuierungseinheit (46a; 46d) zumindest ein erstes Auslöseelement (58a; 58d) und zumindest ein zweites Auslöseelement (64a; 64d) umfasst, wobei das erste Auslöseelement (58a; 58d) dazu vorgesehen ist, die Bremseinheit (42a; 42d) zu betätigen und das zweite Auslöseelement (64a; 64d) dazu vorgesehen ist, das Ausgabeelement (48a; 48d) zu aktivieren.

5. Kettensäge mit zumindest einer Bremsvorrichtung (20a; 20b; 20c; 20d) nach einem der vorhergehenden Ansprüche.

6. Verfahren zum Schutz eines Bedieners einer Kettensäge mittels zumindest einer Bremsvorrichtung (20a; 20b; 20c; 20d), insbesondere nach einem der Ansprüche 1 bis 4, wobei in zumindest einem Verfahrensschritt (102a) zumindest eine Bewegungskenngröße, insbesondere eine Winkelgeschwindigkeit und/oder eine Beschleunigung, der Kettensäge (10a; 10b; 10c; 10d) mittels zumindest einer Sensoreinheit (36a; 36b; 36c; 36d) der Bremsvorrichtung (20a; 20b; 20c; 20d) erfasst wird und wobei in zumindest einem Verfahrensschritt (116a) mittels zumindest einer Aktuierungseinheit (46a; 46b; 46c; 46d) der Bremsvorrichtung (20a; 20b; 20c; 20d) zumindest in Abhängigkeit von der erfassten Bewegungskenngröße zumindest eine Bremseinheit (42a; 42b; 42c; 42d) der Bremsvorrichtung (20a; 20b; 20c; 20d) zu einem Abbremsen und/oder Entkoppeln einer Sägekette (16a; 16b; 16c; 16d) der Kettensäge (10a; 10b; 10c; 10d) betätigt wird und zumindest ein, insbesondere bewegbares, Ausgabeelement (48a; 48b; 48c; 48d), insbesondere Sicherheitsbedienelement, einer Bedieneinheit (44a; 44b; 44c; 44d) der Bremsvorrichtung (20a; 20b; 20c; 20d) zu einer Ausgabe eines betätigten Zustands der Bremseinheit (42a; 42b; 42c; 42d) an den Bediener aktiviert wird, **dadurch gekennzeichnet, dass** in zumindest einem Verfahrensschritt (120a) bei einem Überschreiten eines Grenzwerts eines mittels der Sensoreinheit (36a; 36b; 36c; 36d) erfassten Signals der als Winkelgeschwindigkeit ausgebildeten erfassten Bewegungskenngröße von mindestens 100°/s die Gefahrensituation, die verschieden ist von einem Zurückschlagen eines Sägeschwerts (14a; 14b; 14c; 14d) der Kettensäge (10a; 10b; 10c; 10d), identifiziert wird und die Aktuierungseinheit (46a; 46b; 46c; 46d) angesteuert wird, wobei in dem zumindest einen Verfahrensschritt (120a) mittels der Aktuierungseinheit (46a; 46b; 46c; 46d) in Abhängigkeit von zumindest einer zumindest über die erfasste Bewegungskenngröße ermittelten Gefahrensituation, die verschieden ist von einem Zurückschlagen eines Sägeschwerts (14a; 14b; 14c; 14d) der Kettensäge (10a; 10b; 10c; 10d), die Bremseinheit (42a; 42b; 42c; 42d) betätigt wird und das Ausgabeelement (48a; 48b; 48c; 48d) aktiviert wird.

7. Verfahren nach Anspruch 6, **dadurch gekennzeichnet, dass** in zumindest einem Verfahrensschritt (120a) mittels der Aktuierungseinheit (46a; 46d) das Ausgabeelement (48a; 48d) zumindest mechanisch entkoppelt von und/oder nach einem Betätigen der Bremseinheit (42a; 42d) aktiviert wird.

8. Verfahren nach Anspruch 6 oder 7, **dadurch gekennzeichnet, dass** in zumindest einem Verfahrensschritt (105a) mittels zumindest einer Steuer-und/oder Regeleinheit (52a; 52b; 52c; 52d) der Bremsvorrichtung (20a; 20b; 20c; 20d) zumindest ein Grenzwert zu einer Ermittlung der Gefahrensituation, die verschieden ist von einem Zurückschlagen eines Sägeschwerts (14a; 14b; 14c; 14d) der Kettensäge (10a; 10b; 10c; 10d), dynamisch in Abhängigkeit von zumindest einem gemittelten Verlauf der erfassten Bewegungskenngröße bestimmt wird.

9. Verfahren nach einem der Ansprüche 6 bis 8, **dadurch gekennzeichnet, dass** in zumindest einem Verfahrensschritt (108a) mittels zumindest einer Steuer- und/oder Regeleinheit (52a; 52b; 52c; 52d) der Bremsvorrichtung (20a; 20b; 20c; 20d) zumindest ein Grenzwert zu einer Ermittlung der Gefahrensituation, die verschieden ist von einem Zurückschlagen eines Sägeschwerts (14a; 14b; 14c; 14d) der Kettensäge (10a; 10b; 10c; 10d), in Abhängigkeit von einer Bewegung einer Gehäuseeinheit und/oder des Sägeschwerts (14a; 14b; 14c; 14d) der Kettensäge (10a; 10b; 10c; 10d) bestimmt wird.

10. Verfahren nach einem der Ansprüche 6 bis 9, **dadurch gekennzeichnet, dass** in zumindest einem Verfahrensschritt (110a) mittels zumindest einer Steuer- und/oder Regeleinheit (52a; 52b; 52c; 52d) der Bremsvorrichtung (20a; 20b; 20c; 20d) zumindest ein Grenzwert zu einer Ermittlung der Gefahrensituation, die verschieden ist von einem Zurückschlagen eines Sägeschwerts (14a; 14b; 14c; 14d) der Kettensäge (10a; 10b; 10c; 10d), über ein maschinelles Lernverfahren ermittelt wird.

11. Verfahren nach einem der Ansprüche 6 bis 10, **dadurch gekennzeichnet, dass** in zumindest einem Verfahrensschritt (112a) mittels zumindest einer Steuer- und/oder Regeleinheit (52a; 52b; 52c; 52d) der Bremsvorrichtung (20a; 20b; 20c; 20d) zumindest ein Grenzwert zu einer Ermittlung der Gefahrensituation, die verschieden ist von einem Zurückschlagen eines Sägeschwerts (14a; 14b; 14c; 14d) der Kettensäge (10a; 10b; 10c; 10d), in Abhängigkeit von zumindest einer Betriebskenngröße der Kettensäge (10a; 10b; 10c; 10d), insbesondere einer Drehzahl einer Antriebseinheit oder einer Sägekette (16a; 16b; 16c; 16d) der Kettensäge (10a; 10b; 10c; 10d), bestimmt wird.

12. Verfahren nach einem der Ansprüche 6 bis 11, **dadurch gekennzeichnet, dass** in zumindest einem Verfahrensschritt (114a) mittels zumindest einer Steuer- und/oder Regeleinheit (52a; 52b; 52c; 52d) der Bremsvorrichtung (20a; 20b; 20c; 20d) zumindest ein Grenzwert zu einer Ermittlung der Gefahrensituation, die verschieden ist von einem Zurückschlagen eines Sägeschwerts (14a; 14b; 14c; 14d) der Kettensäge (10a; 10b; 10c; 10d), in Abhängigkeit von einer durch den Bediener, insbesondere mittels der Bedieneinheit (44a; 44b; 44c; 44d) der Bremsvorrichtung (20a; 20b; 20c; 20d), vorgenommenen Einstellung bestimmt wird.

## Claims

1. Brake device for a chainsaw, comprising at least one sensor unit (36a; 36b; 36c; 36d) which comprises at least one sensor element (38a; 38b; 38c; 38d), in particular a gyroscope, for detecting at least one movement characteristic variable, in particular an angular velocity and/or an acceleration, of the chainsaw (10a; 10b; 10c; 10d), comprising at least one brake unit (42a; 42b; 42c; 42d) for braking and/or decoupling a saw chain (16a; 16b; 16c; 16d) of the chainsaw (10a; 10b; 10c; 10d), comprising at least one operator control unit (44a; 44b; 44c; 44d) for interacting with an operator and comprising at least one actuating unit (46a; 46b; 46c; 46d) which is provided for actuating the brake unit (42a; 42b; 42c; 42d) at least as a function of the detected movement characteristic variable and for activating an, in particular movable, output element (48a; 48b; 48c, 48d), in particular safety operator control element, of the operator control unit (44a; 44b; 44c; 44d), which output element outputs an actuated state of the brake unit (42a; 42b; 42c; 42d) to the operator, wherein the actuating unit (46a; 46b; 46c; 46d) is provided for actuating the brake unit (42a; 42b; 42c; 42d) and for activating the output element (48a; 48b; 48c; 48d) as a function of at least one hazardous situation which is ascertained at least via the detected movement characteristic variable and is different from kickback of a saw blade (14a; 14b; 14c; 14d) of the chainsaw (10a; 10b; 10c; 10d), **characterized in that** at least one open-loop and/or closed-loop control unit (52a; 52b; 52c; 52d) which is designed, when a limit value of a signal, detected by means of the sensor unit (36a; 36b; 36c; 36d), of the detected movement characteristic variable in the form of an angular velocity of at least 100°/s is exceeded, to identify the hazardous situation, which is different from kickback of a saw blade (14a; 14b; 14c; 14d) of the chainsaw (10a; 10b; 10c; 10d), and to actuate the actuating unit (46a; 46b; 46c; 46d).

2. Brake device according to Claim 1, **characterized in that** the actuating unit (46a; 46b; 46c; 46d) has at least one actuating element (56a; 56b; 56c; 56d, 66d) for actuating the brake unit (42a; 42b; 42c; 42d) and/or activating the output element (48a; 48b; 48c; 48d), wherein the actuating element (56a; 56b; 56c; 56d, 66d) is at least partially formed from a shape-memory material.

3. Brake device according to either of the preceding claims, **characterized in that** the actuating unit (46a; 46d) is provided for activating the output element (48a; 48d) at least mechanically decoupled from and/or after actuation of the brake unit (42a; 42d).

4. Brake device according to any of the preceding claims, **characterized in that** the actuating unit (46a; 46d) comprises at least one first tripping element (58a; 58d) and at least one second tripping element (64a; 64d), wherein the first tripping element (58a; 58d) is provided for actuating the brake unit (42a; 42d) and the second tripping element (64a; 64d) is provided for activating the output element (48a; 48d).

5. Chainsaw comprising at least one brake device (20a; 20b; 20c; 20d) according to any of the preceding claims.

6. Method for protecting an operator of a chainsaw by means of at least one brake device (20a; 20b; 20c; 20d), in particular according to any of Claims 1 to 4, wherein in at least one method step (102a) at least one movement characteristic variable, in particular an angular velocity and/or an acceleration, of the chainsaw (10a; 10b; 10c; 10d) is detected by means of at least one sensor unit (36a; 36b; 36c; 36d) of the brake device (20a; 20b; 20c; 20d) and wherein in at least one method step (116a) at least one brake unit (42a; 42b; 42c; 42d) of the brake device (20a; 20b; 20c; 20d) is actuated by means of at least one actuating unit (46a; 46b; 46c; 46d) of the brake device (20a; 20b; 20c; 20d) at least as a function of the detected movement characteristic variable for braking and/or decoupling a saw chain (16a; 16b; 16c; 16d) of the chainsaw (10a; 10b; 10c; 10d) and at least one, in particular movable, output element (48a; 48b; 48c; 48d), in particular safety operator control element, of an operator control unit (44a; 44b; 44c; 44d) of the brake device (20a; 20b; 20c; 20d) is activated to output an actuated state of the brake unit (42a; 42b; 42c; 42d) to the operator, **characterized in that** in at least one method step (120a), when a limit value of a signal, detected by means of the sensor unit (36a; 36b; 36c; 36d), of the detected movement characteristic variable in the form of an angular velocity of at least 100°/s is exceeded, the hazardous situation, which is different from kickback of a saw blade (14a; 14b; 14c; 14d) of the chainsaw (10a; 10b; 10c; 10d), is identified and the actuating unit (46a; 46b; 46c; 46d) is actuated, wherein in the at least one method step (120a) the brake unit (42a; 42b; 42c; 42d) is actuated and the output element (48a; 48b; 48c; 48d) is activated by means of the actuating unit (46a; 46b; 46c; 46d) as a function of at least one hazardous situation which is ascertained at least via the detected movement characteristic variable and is different from kickback of a saw blade (14a; 14b; 14c; 14d) of the chainsaw (10a; 10b; 10c; 10d).

7. Method according to Claim 6, **characterized in that** in at least one method step (120a) the output element (48a; 48d) at least mechanically decoupled from and/or after actuation of the brake unit (42a; 42d) is activated by means of the actuating unit (46a; 46d).

8. Method according to Claim 6 or 7, **characterized in that** in at least one method step (105a) at least one limit value for ascertaining the hazardous situation, which is different from kickback of a saw blade (14a; 14b; 14c; 14d) of the chainsaw (10a; 10b; 10c; 10d), is determined dynamically by means of at least one open-loop and/or closed-loop control unit (52a; 52b; 52c; 52d) of the brake device (20a; 20b; 20c; 20d) as a function of at least one averaged profile of the detected movement characteristic variable.

9. Method according to any of Claims 6 to 8, **characterized in that** in at least one method step (108a) at least one limit value for ascertaining the hazardous situation, which is different from kickback of a saw blade (14a; 14b; 14c; 14d) of the chainsaw (10a; 10b; 10c; 10d), is determined by means of at least one open-loop and/or closed-loop control unit (52a; 52b; 52c; 52d) of the brake device (20a; 20b; 20c; 20d) as a function of movement of a housing unit and/or of the saw blade (14a; 14b; 14c; 14d) of the chainsaw (10a; 10b; 10c; 10d).

10. Method according to any of Claims 6 to 9, **characterized in that** in at least one method step (110a) at least one limit value for ascertaining the hazardous situation, which is different from kickback of a saw blade (14a; 14b; 14c; 14d) of the chainsaw (10a; 10b; 10c; 10d), is ascertained by means of at least one open-loop and/or closed-loop control unit (52a; 52b; 52c; 52d) of the brake device (20a; 20b; 20c; 20d) by way of a machine learning process.

11. Method according to any of Claims 6 to 10, **characterized in that** in at least one method step (112a) at least one limit value for ascertaining the hazardous situation, which is different from kickback of a saw blade (14a; 14b; 14c; 14d) of the chainsaw (10a; 10b; 10c; 10d), is determined by means of at least one open-loop and/or closed-loop control unit (52a; 52b; 52c; 52d) of the brake device (20a; 20b; 20c; 20d) as a function of at least one operating characteristic variable of the chainsaw (10a; 10b; 10c; 10d), in particular of a rotation speed of the drive unit or a saw chain (16a; 16b; 16c; 16d) of the chainsaw (10a; 10b; 10c; 10d).

12. Method according to any of Claims 6 to 11, **characterized in that** in at least one method step (114a) at least one limit value for ascertaining the hazardous situation, which is different from kickback of a saw blade (14a; 14b; 14c; 14d) of the chainsaw (10a; 10b; 10c; 10d), is determined by means of at least one open-loop and/or closed-loop control unit (52a; 52b; 52c; 52d) of the brake device (20a; 20b; 20c; 20d) as a function of a setting made by the operator, in particular by means of the operator control unit (44a; 44b; 44c; 44d) of the brake device (20a; 20b; 20c; 20d).

## Revendications

1. Dispositif de freinage pour une scie à chaîne, comportant au moins une unité de détection (36a ; 36b ; 36c ; 36d) qui comprend au moins un élément de détection (38a ; 38b ; 38c ; 38d), en particulier un gyroscope, pour une détection d'au moins une grandeur caractéristique de mouvement, en particulier une vitesse angulaire et/ou une accélération, de la scie à chaîne (10a ; 10b ; 10c ; 10d), comportant au moins une unité de freinage (42a ; 42b ; 42c ; 42d) pour un freinage et/ou un désaccouplement d'une chaîne de scie (16a ; 16b ; 16c ; 16d) de la scie à chaîne (10a ; 10b ; 10c ; 10d), comportant au moins une unité de commande (44a ; 44b ; 44c ; 44d) pour une interaction avec un opérateur et comportant au moins une unité d'actionnement (46a ; 46b ; 46c ; 46d) qui est prévue pour actionner l'unité de freinage (42a ; 42b ; 42c ; 42d) au moins en fonction de la grandeur caractéristique de mouvement détectée et pour activer un élément de sortie (48a ; 48b ; 48c ; 48d), en particulier mobile, en particulier un élément de commande de sécurité, de l'unité de commande (44a ; 44b ; 44c ; 44d), lequel indique à l'opérateur un état actionné de l'unité de freinage (42a ; 42b ; 42c ; 42d), l'unité d'actionnement (46a ; 46b ; 46c ; 46d) étant prévue pour actionner l'unité de freinage (42a ; 42b ; 42c ; 42d) et pour activer l'élément de sortie (48a ; 48b ; 48c ; 48d) en fonction d'au moins une situation de danger déterminée au moins par l'intermédiaire de la grandeur caractéristique de mouvement détectée, laquelle est différente d'un rebond d'un guide-chaîne (14a ; 14b ; 14c ; 14d) de la scie à chaîne (10a ; 10b ; 10c ; 10d), **caractérisé en ce qu'**au moins une unité de commande et/ou de régulation (52a ; 52b ; 52c ; 52d), laquelle est conçue pour identifier la situation de danger différente d'un rebond d'un guide-chaîne (14a ; 14b ; 14c ; 14d) de la scie à chaîne (10a ; 10b ; 10c ; 10d) et pour commander l'unité d'actionnement (46a ; 46b ; 46c ; 46d) lors d'un dépassement d'une valeur limite d'au moins 100°/s d'un signal, détecté au moyen de l'unité de détection (36a ; 36b ; 36c ; 36d), de la grandeur caractéristique de mouvement détectée réalisée sous forme de vitesse angulaire.

2. Dispositif de freinage selon la revendication 1, **caractérisé en ce que** l'unité d'actionnement (46a ; 46b ; 46c ; 46d) comporte au moins un élément d'actionnement (56a ; 56b ; 56c ; 56d, 66d) pour un actionnement de l'unité de freinage (42a ; 42b ; 42c ; 42d) et/ou une activation de l'élément de sortie (48a ; 48b ; 48c ; 48d), l'élément d'actionnement (56a ; 56b ; 56c ; 56d, 66d) étant au moins partiellement formé à partir d'un matériau à mémoire de forme.

3. Dispositif de freinage selon l'une des revendications précédentes, **caractérisé en ce que** l'unité d'actionnement (46a ; 46d) est prévue pour activer l'élément de sortie (48a ; 48d) de manière au moins mécaniquement découplée de, et/ou après l'actionnement de l'unité de freinage (42a ; 42d).

4. Dispositif de freinage selon l'une des revendications précédentes, **caractérisé en ce que** l'unité d'actionnement (46a ; 46d) comprend au moins un premier élément de déclenchement (58a ; 58d) et au moins un deuxième élément de déclenchement (64a ; 64d), le premier élément de déclenchement (58a ; 58d) étant prévu pour actionner l'unité de freinage (42a ; 42d) et le deuxième élément de déclenchement (64a ; 64d) étant prévu pour activer l'élément de sortie (48a ; 48d).

5. Scie à chaîne munie d'au moins un dispositif de freinage (20a ; 20b ; 20c ; 20d) selon l'une des revendications précédentes.

6. Procédé de protection d'un opérateur d'une scie à chaîne au moyen d'au moins un dispositif de freinage (20a ; 20b ; 20c ; 20d), en particulier selon l'une des revendications 1 à 4, dans lequel, lors d'au moins une étape de procédé (102a), au moins une grandeur caractéristique de mouvement, en particulier une vitesse angulaire et/ou une accélération de la scie à chaîne (10a ; 10b ; 10c ; 10d) est détectée au moyen d'au moins une unité de détection (36a ; 36b ; 36c ; 36d) du dispositif de freinage (20a ; 20b ; 20c ; 20d), et dans lequel, lors d'au moins une étape de procédé (116a), au moins une unité de freinage (42a ; 42b ; 42c ; 42d) du dispositif de freinage (20a ; 20b ; 20c ; 20d) est actionnée au moyen d'au moins une unité d'actionnement (46a ; 46b ; 46c ; 46d) du dispositif de freinage (20a ; 20b ; 20c ; 20d), au moins en fonction de la grandeur caractéristique de mouvement détectée, pour un freinage et/ou un désaccouplement d'une chaîne de scie (16a ; 16b ; 16c ; 16d) de la scie à chaîne (10a ; 10b ; 10c ; 10d), et au moins un élément de sortie (48a ; 48b ; 48c ; 48d), en particulier mobile, en particulier un élément de commande de sécurité, d'une unité de commande (44a ; 44b ; 44c ; 44d) du dispositif de freinage (20a ; 20b ; 20c ; 20d) est activé pour indiquer à l'opérateur un état actionné de l'unité de freinage (42a ; 42b ; 42c ; 42d), **caractérisé en ce que**, lors d'au moins une étape de procédé (120a), lors d'un dépassement d'une valeur limite d'au moins 100°/s d'un signal, détecté au moyen de l'unité de détection (36a ; 36b ; 36c ; 36d), de la grandeur caractéristique de mouvement détectée réalisée sous forme de vitesse angulaire, la situation de danger, laquelle est différente d'un rebond d'un guide-chaîne (14a ; 14b ; 14c ; 14d) de la scie à chaîne (10a ; 10b ; 10c ; 10d), est identifiée et l'unité d'actionnement (46a ; 46b ; 46c ; 46d) est commandée, l'unité de freinage (42a ; 42b ; 42c ; 42d) étant actionnée et l'élément de sortie (48a ; 48b ; 48c ; 48d) étant activé lors de ladite au moins une étape de procédé (120a) au moyen de l'unité d'actionnement (46a ; 46b ; 46c ; 46d) en fonction d'au moins une situation de danger déterminée au moins par l'intermédiaire de la grandeur caractéristique de mouvement détectée, laquelle est différente d'un rebond d'un guide-chaîne (14a ; 14b ; 14c ; 14d) de la scie à chaîne (10a ; 10b ; 10c ; 10d).

7. Procédé selon la revendication 6, **caractérisé en ce que**, lors d'au moins une étape de procédé (120a), l'élément de sortie (48a ; 48d) est activé au moyen de l'unité d'actionnement (46a ; 46d) de manière au moins mécaniquement découplée de, et/ou après l'actionnement de l'unité de freinage (42a ; 42d).

8. Procédé selon la revendication 6 ou 7, **caractérisé en ce que**, lors d'au moins une étape de procédé (105a), au moyen d'au moins une unité de commande et/ou de régulation (52a ; 52b ; 52c ; 52d) du dispositif de freinage (20a ; 20b ; 20c ; 20d), au moins une valeur limite pour une détermination de la situation de danger, laquelle est différente d'un rebond d'un guide-chaîne (14a ; 14b ; 14c ; 14d) de la scie à chaîne (10a ; 10b ; 10c ; 10d), est déterminée dynamiquement en fonction d'au moins un profil moyenné de la grandeur caractéristique de mouvement détectée.

9. Procédé selon l'une des revendications 6 à 8, **caractérisé en ce que**, lors d'au moins une étape de procédé (108a), au moyen d'au moins une unité de commande et/ou de régulation (52a ; 52b ; 52c ; 52d) du dispositif de freinage (20a ; 20b ; 20c ; 20d), au moins une valeur limite pour une détermination de la situation de danger, laquelle est différente d'un rebond d'un guide-chaîne (14a ; 14b ; 14c ; 14d) de la scie à chaîne (10a ; 10b ; 10c ; 10d), est déterminée en fonction d'un mouvement d'une unité de carter et/ou du guide-chaîne (14a ; 14b ; 14c ; 14d) de la scie à chaîne (10a ; 10b ; 10c ; 10d).

10. Procédé selon l'une des revendications 6 à 9, **caractérisé en ce que**, lors d'au moins une étape de procédé (110a), au moyen d'au moins une unité de commande et/ou de régulation (52a ; 52b ; 52c ; 52d) du dispositif de freinage (20a ; 20b ; 20c ; 20d), au moins une valeur limite pour une détermination de la situation de danger, laquelle est différente d'un rebond d'un guide-chaîne (14a ; 14b ; 14c ; 14d) de la scie à chaîne (10a ; 10b ; 10c ; 10d), est déterminée au moyen d'un procédé d'apprentissage automatique.

11. Procédé selon l'une des revendications 6 à 10, **caractérisé en ce que**, lors d'au moins une étape de procédé (112a), au moyen d'au moins une unité de commande et/ou de régulation (52a ; 52b ; 52c ; 52d) du dispositif de freinage (20a ; 20b ; 20c ; 20d), au moins une valeur limite pour une détermination de la situation de danger, laquelle est différente d'un rebond d'un guide-chaîne (14a ; 14b ; 14c ; 14d) de la scie à chaîne (10a ; 10b ; 10c ; 10d), est déterminée en fonction d'au moins une grandeur caractéristique de fonctionnement de la scie à chaîne (10a ; 10b ; 10c ; 10d), en particulier d'une vitesse de rotation d'une unité d'entraînement ou d'une chaîne de scie (16a ; 16b ; 16c ; 16d) de la scie à chaîne (10a ; 10b ; 10c ; 10d).

12. Procédé selon l'une des revendications 6 à 11, **caractérisé en ce que**, lors d'au moins une étape de procédé (114a), au moyen d'au moins une unité de commande et/ou de régulation (52a ; 52b ; 52c ; 52d) du dispositif de freinage (20a ; 20b ; 20c ; 20d), au moins une valeur limite pour une détermination de la situation de danger, laquelle est différente d'un rebond d'un guide-chaîne (14a ; 14b ; 14c ; 14d) de la scie à chaîne (10a ; 10b ; 10c ; 10d), est déterminée en fonction d'un réglage effectué par l'opérateur, en particulier au moyen de l'unité de commande (44a ; 44b ; 44c ; 44d) du dispositif de freinage (20a ; 20b ; 20c ; 20d).
